Europäisches Patentamt

European Patent Office

Office européen des brevets

(19)

(11) **EP 1 496 459 A1**

(12) **EUROPEAN PATENT APPLICATION**
published in accordance with Art. 158(3) EPC

(43) Date of publication:
**12.01.2005 Bulletin 2005/02**

(21) Application number: **03717551.0**

(22) Date of filing: **10.04.2003**

(51) Int Cl.7: **G06F 17/60**

(86) International application number:
**PCT/JP2003/004544**

(87) International publication number:
**WO 2003/088114 (23.10.2003 Gazette 2003/43)**

(84) Designated Contracting States:
**AT BE BG CH CY CZ DE DK EE ES FI FR GB GR
HU IE IT LI LU MC NL PT RO SE SI SK TR**

(30) Priority: **15.04.2002 JP 2002111927**

(71) Applicant: **Sony Corporation
Tokyo 141-0001 (JP)**

(72) Inventors:
• **ISHIGURO, Ryuji c/o SONY CORPORATION
Shinagawa-ku, Tokyo 141-0001 (JP)**

• **KAWAMOTO, Yoji c/o SONY CORPORATION
Shinagawa-ku, Tokyo 141-0001 (JP)**
• **EZURA, Yuichi c/o SONY CORPORATION
Shinagawa-ku, Tokyo 141-0001 (JP)**
• **NAGANO, Motohiko c/o SONY CORPORATION
Shinagawa-ku, Tokyo 141-0001 (JP)**

(74) Representative:
**Robinson, Nigel Alexander Julian
D Young & Co
120 Holborn
London EC1N 2DY (GB)**

(54) **INFORMATION PROCESSING DEVICE AND METHOD, PROGRAM STORING MEDIUM, AND PROGRAM**

(57) The present invention relates to an information processing apparatus and method, a program storage medium, and a program for distributing usage rights for individual smaller details without placing a burden on a client. A usage right held by a content holder server 6 is provided to a license server 4. The license server 4 divides the usage right provided by the content holder server 6 into, for example, a playback-only usage right and a playback-and-checkout usage right. A client 1 pays 10 yen to obtain the playback usage right. The client 1 pays additional 30 yen to obtain the playback-and-checkout usage right. In other words, the playback-only usage right is upgraded to the playback-and-checkout usage right. The present invention is applicable to a server for providing content via a network.

FIG. 30

## Description

Technical Field

The present invention relates to information processing apparatuses and methods, program storage media, and programs. More particularly, the present invention relates to an information processing apparatus and method, a program storage medium, and a program for providing, without placing a burden on a user, a usage right whose details are divided into smaller sections.

Background Art

Recently, networks, typified by the Internet, have become widely used. Content, such as audio content or video content, has become distributed via various networks. A user (client) accesses a server via a network to download content.

It has been proposed to make content and a usage right for using this content independent of each other. In such a case, the user needs to obtain, separately from content, a usage right for the content. Content is generally encrypted and provided to the user. A key to decrypt the encryption is generally included in a usage right for the content. Alternatively, content includes a decryption key. This content is decrypted by tamper resistant software or the like, without making a decryption algorithm known to the user.

Accordingly, content is distributed easily.

The details of a usage right may change depending on payment conditions. For example, the details of a usage right may be as follows. When the user pays 200 yen at the time of registration, the user can use upto ten songs for a month. When the user pays additional 50 yen for each song, the user can own that song (without expiration limit). When the user pays additional 100 yen, the user can check out that song to a portable device.

When the details of a usage right are complex as described above, a client who has obtained this usage right needs to manage the status of the usage right by himself or herself. Specifically, the client needs to manage the current status of the usage right, such as whether the client has paid only 200 yen, whether the client has subsequently paid additional 50 yen for each song, if so, to which song the client has paid the fee, and whether the client has subsequently paid additional 100 yen to check out that song to a portable device. Making the client manage such a task is a heavy burden on the client.

Making the client manage such a task may enable the client, who may be a dishonest user, to alter the usage right. This is not preferable in terms of security.

Disclosure of Invention

In view of the above-described circumstances, it is an object of the present invention to manage a usage right in a secure manner without placing a burden on a client.

An information processing apparatus of the present invention includes reception means for receiving information including a usage rule; extraction means for extracting part of the usage rule received by the reception means and generating a partial usage rule; and distribution means for distributing the partial usage rule generated by the extraction means to a user.

The information processing apparatus may further include generation means for generating a usage right from the partial usage rule.

The usage rule received by the reception means may be defined for each usage of the corresponding content. The extraction means may generate the partial usage rule including a usage rule concerning at least one usage.

The information received by the reception means may include billing information associated with the usage rule.

An information processing method of the present invention includes a reception step of receiving information including a usage rule; an extraction step of extracting part of the usage rule received in the reception step and generating a partial usage rule; and a distribution step of distributing the partial usage rule generated in the extraction step to a user.

A program stored on a program storage medium of the present invention includes a reception step of receiving information including a usage rule; an extraction step of extracting part of the usage rule received in the reception step and generating a partial usage rule; and a distribution step of distributing the partial usage rule generated in the extraction step to a user.

A program of the present invention causes a computer to perform a process including a reception step of receiving information including a usage rule; an extraction step of extracting part of the usage rule received in the reception step and generating a partial usage rule; and a distribution step of distributing the partial usage rule generated in the extraction step to a user.

According to the present invention, part of a usage rule included in received information is extracted to generate a partial usage rule, and the generated partial usage rule is distributed to a user.

Brief Description of the Drawings

Fig. 1 is a diagram showing the configuration of a content providing system according to the present invention.

Fig. 2 is a block diagram showing the configuration of a license server shown in Fig. 1.

Fig. 3 is a flowchart describing a content downloading process by each client shown in Fig. 1.

Fig. 4 is a flowchart describing a content providing process by a content server shown in Fig. 1.

Fig. 5 is an illustration of the format in step S26 of Fig. 4.

Fig. 6 is a flowchart describing a content playing process by the client shown in Fig. 1.

Fig. 7 is a flowchart describing the details of a usage right obtaining process in step S43 of Fig. 6.

Fig. 8 is an illustration showing the structure of a usage right.

Fig. 9 is a flowchart describing a usage right providing process by the license server shown in Fig. 1.

Fig. 10 is a diagram describing the arrangement of keys.

Fig. 11 is a diagram describing category nodes.

Fig. 12 is a diagram showing a specific example of the association between a node and a device.

Fig. 13 is an illustration describing the structure of an enabling key block.

Fig. 14 is an illustration describing the structure of an enabling key block.

Fig. 15 is a diagram describing use of the enabling key block.

Fig. 16 is an illustration showing an example of the format of an enabling key block.

Fig. 17 is a diagram describing the structure of each tag in the enabling key block.

Fig. 18 is a diagram describing a content decrypting process using a DNK.

Fig. 19 is an illustration showing an example of an enabling key block.

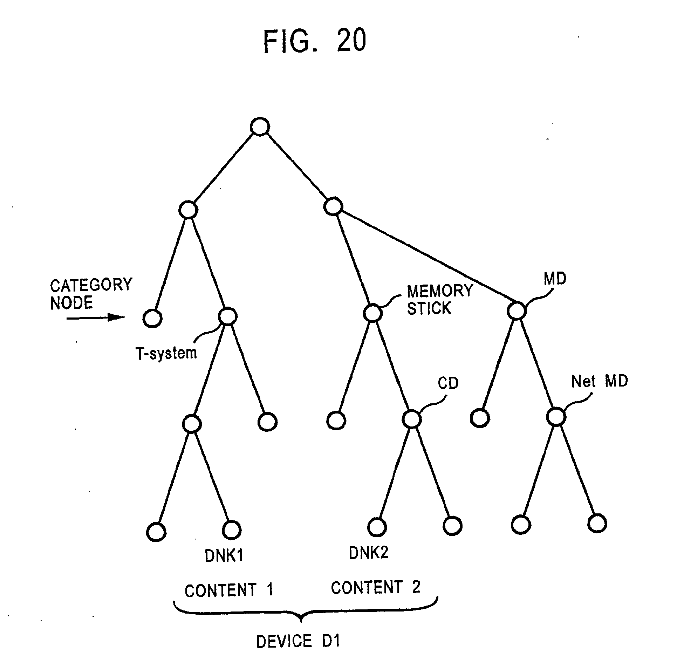

Fig. 20 is a diagram describing the allocation of a plurality of pieces of content to a device.

This is a diagram describing the category of a license.

Fig. 21 is a flowchart describing a usage right providing process by a content holder server shown in Fig. 1.

Fig. 22 is a flowchart describing a usage right obtaining process by the license server shown in Fig. 1.

Fig. 23 is an illustration showing an example of a usage right provided by the content holder server shown in Fig. 1.

Fig. 24 is an illustration showing an example in which the usage right shown in Fig. 23 is divided.

Fig. 25 is a flowchart showing an example of a usage right dividing process in step S303 of Fig. 22.

Fig. 26 is an illustration showing an example of a usage right registered in step S302 of Fig. 22.

Fig. 27 is an illustration showing an example of a usage right divided from the usage right shown in Fig. 26.

Fig. 28 is a flowchart showing another example of the usage right dividing process in step S303 of Fig. 22.

Fig. 29 is an illustration showing an example of a usage right registered by the processing in step S351 of Fig. 28.

Fig. 30 is a diagram describing division of a usage right.

Fig. 31 is an illustration showing an example of a usage right provided by the content holder server to the license server shown in Fig. 1.

Fig. 32 is a flowchart describing a usage right purchasing process and a usage right upgrading process.

Fig. 33 is a diagram showing an example of displayed information in the usage right dividing process.

Fig. 34 is a diagram describing management of the usage status by the license server shown in Fig. 1.

Fig. 35 is a diagram describing a plurality of protocols.

Fig. 36 is a flowchart describing a usage right obtaining process by the client shown in Fig. 1.

Fig. 37 is a flowchart describing a usage right distributing process by the license server shown in Fig. 1.

Fig. 38 is a flowchart describing a usage right using process by the client shown in Fig. 1.

Fig. 39 is a flowchart describing a usage status updating process by the license server shown in Fig. 1.

Fig. 40 is an illustration describing a basic method of describing Usage Rules.

Fig. 41 is an illustration showing an example of the description format of UsageRule.

Fig. 42 is an illustration showing examples of operators.

Fig. 43 is an illustration showing examples of usage rules described by a rule description language.

Best Mode for Carrying Out the Invention

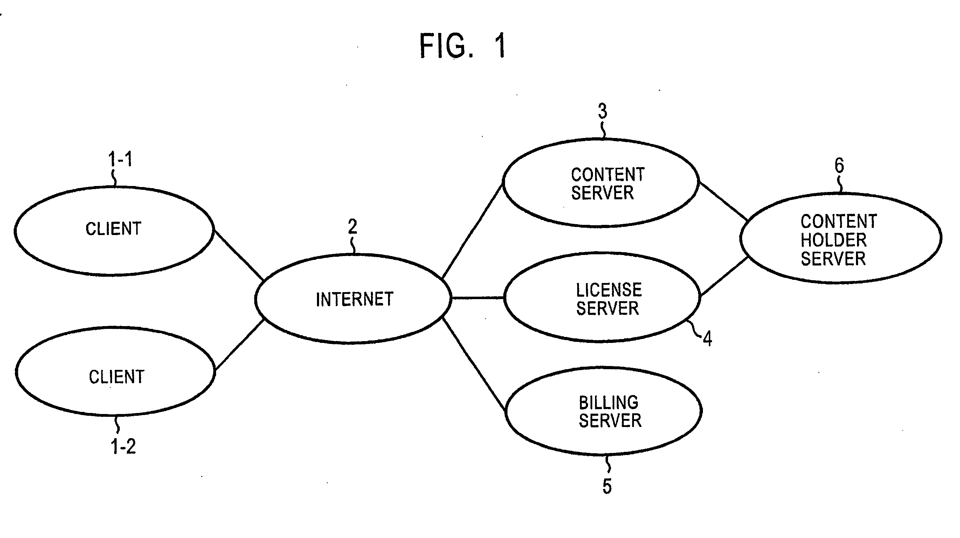

Fig. 1 shows the configuration of a content providing system according to the present invention. Clients 1-1 and 1-2 (hereinafter simply referred to as a client 1 whenever it is unnecessary to distinguish individual clients) are connected to the Internet 2. Although only two clients are shown in this example, an arbitrary number of clients may be connected to the Internet 2.

In addition, a content server 3 that provides content to the client 1, a license server 4 that grants the client 1 a necessary usage right for using the content provided by the content server 3, and a billing server 5 that bills the client 1 upon reception of the usage right by the client 1 are connected to the Internet 2.

A content holder server 6 is connected to the content server 3 and the license server 4. The content holder server 6 provides content to the content server 3 and product information concerning content to the license server 4.

An arbitrary number of each of the content server 3, the license server 4, the billing server 5, and the content holder server 6 are connected, where necessary, to the Internet 2.

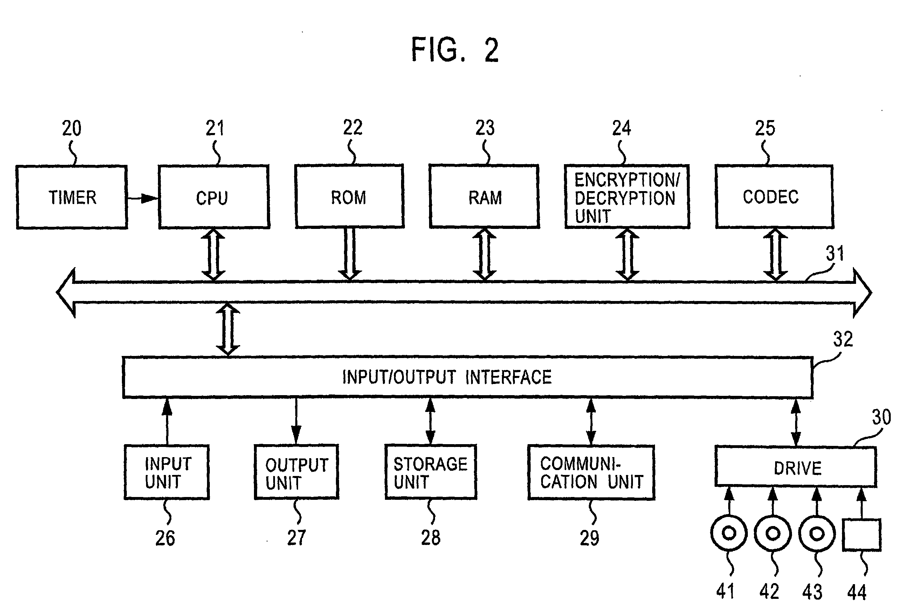

Fig. 2 shows the configuration of the license server 4.

Referring to Fig. 2, a CPU (Central Processing Unit) 21 performs various processes in accordance with a program stored in a ROM (Read Only Memory) 22 or a program loaded from a storage unit 28 to a RAM (Random Access Memory) 23. A timer 20 keeps time and supplies time information to the CPU 21. The RAM 23 appropriately stores necessary data for performing various processes by the CPU 21.

An encryption/decryption unit 24 encrypts content data and decrypts encrypted content data. A codec 25 encodes content data in, for example, ATRAC (Adaptive Transform Acoustic Coding) 3 and supplies and records the encoded content data via an input/output interface 32 onto a semiconductor memory 44 connected to a drive 30. Also, the codec 25 decodes encoded data read from the semiconductor memory 44 via the drive 30.

The semiconductor memory 44 includes, for example, a memory stick (trademark).

The CPU 21, the ROM 22, the RAM 23, the encryption/decryption unit 24, and the codec 25 are interconnected via a bus 31. Also, the input/output interface 32 is connected to the bus 31.

An input unit 26 including a keyboard, a mouse, and the like, an output unit 27 including a display, such as a CRT or an LCD, a speaker, and the like, a storage unit 28 including a hard disk and the like, and a communication unit 29 including a modem, a terminal adapter, and the like are connected to the input/output interface 32. The communication unit 29 performs communication via the Internet 2. The communication unit 29 communicates analog signals or digital signals with another client.

Where necessary, the drive 30 is connected to the input/output interface 32. On the drive 30, a magnetic disk 41, an optical disk 42, a magneto-optical disk 43, or the semiconductor memory 44 is appropriately placed. Where necessary, a computer program read from the placed medium is installed on the storage unit 28.

Although not shown in the drawing, basically the client 1, the content server 3, and the billing server 5 each have a computer having a configuration similar to that of the license server 4 shown in Fig. 2. In the following description, the configuration shown in Fig. 2 may also be cited as the configuration of the client 1, the content server 3, the billing server 5, and the like.

Although not shown in the drawing, a PD (Portable Device) also includes a computer having a configuration that is basically similar to that of the license server 4 shown in Fig. 2.

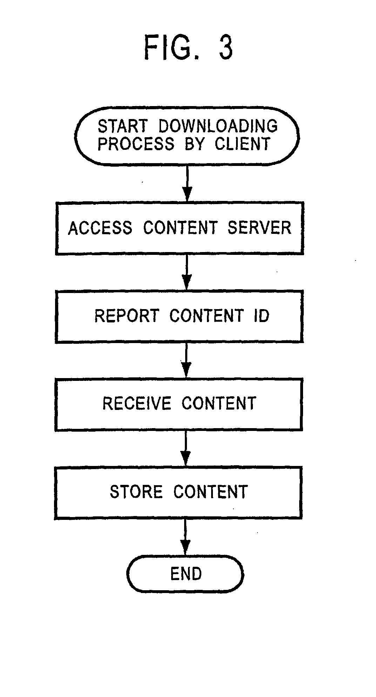

With reference to a flowchart of Fig. 3, a process of receiving content, which is provided by the content server 3, by the client 1 will now be described.

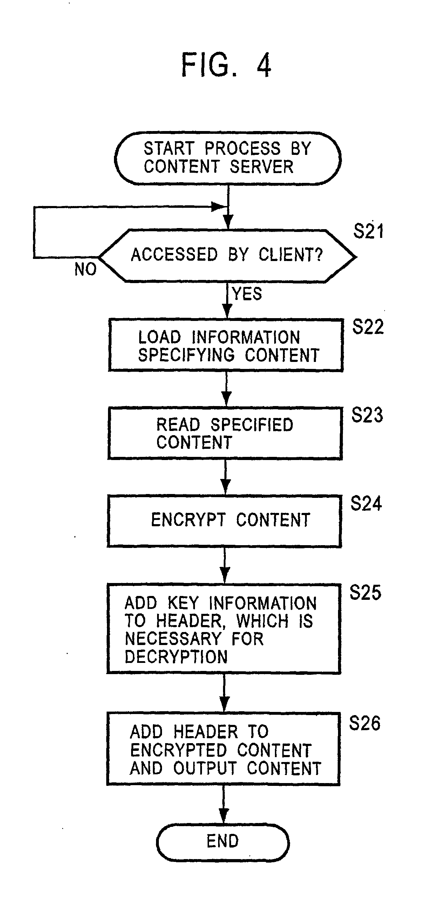

When a user instructs the client 1 to access the content server 3 by operating the input unit 26, in step S1, the CPU 21 controls the communication unit 29 to access the content server 3 via the Internet 2. In step S2, when the user operates the input unit 26 to specify content to be provided, the CPU 21 receives this specification information and notifies the content server 3 of the content ID of the specified content using the communication unit 29 via the Internet 2. As will be described below with reference to a flowchart of Fig. 4, the content server 3 having been notified of the content ID transmits the content including encrypted content data. In step S3, the CPU 21 receives the content data via the communication unit 29. In step S4, the CPU 21 supplies and stores the encrypted content data in the hard disk included in the storage unit 28.

With reference to the flowchart of Fig. 4, a content providing process by the content server 3, which is performed in association with the above-described process by the client 1, will now be described. In the following description, the configuration of the license server 4 shown in Fig. 2 is also cited as the configuration of the content server 3.

In step S21, the CPU 21 of the content server 3 is queued until the content server 3 is accessed by the client 1 using the communication unit 29 via the Internet 2. When it is determined that the content server 3 has been accessed by the client 1, in step S22, the CPU 21 of the content server 3 loads the content ID transmitted by the client 1. This content ID is the information notified by the client 1 in step S2 of Fig. 3.

In step S23, the CPU 21 of the content server 3 reads, from content stored in the storage unit 28, content data specified by the content ID loaded by the processing in step S22. In step S24, the CPU 21 supplies the content data read from the storage unit 28 to the encryption/decryption unit 24, which in turn encrypts the content data using a content key Kc.

Since the content data stored in the storage unit 28 has already been encoded in ATRAC 3 by the codec 25, the encoded content data is encrypted.

Alternatively, encrypted content data may be stored in the storage unit 28. In this case, the processing in step S24 may be omitted.

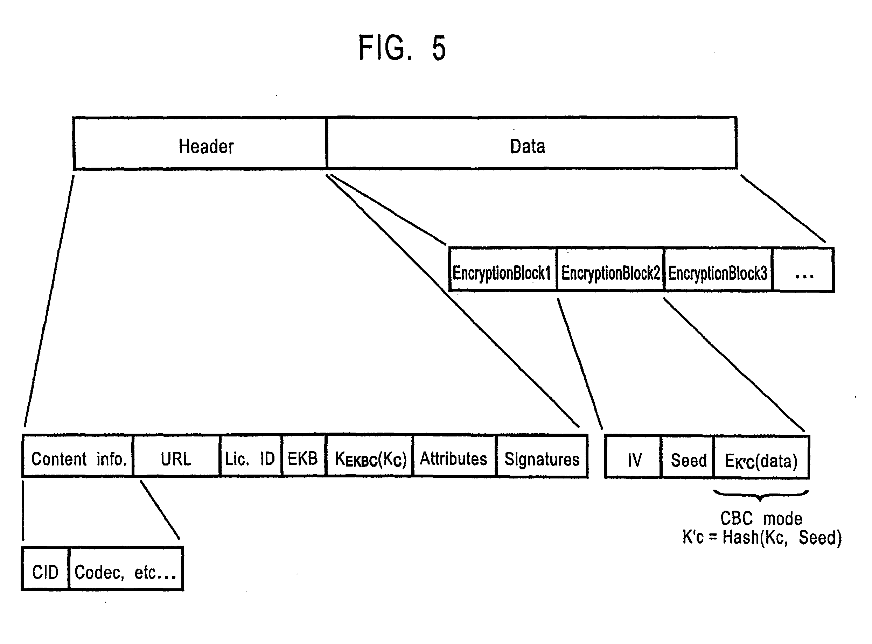

In step S25, the CPU 21 of the content server 3 adds key information to the header of the format for transmitting the encrypted content data. This key information is required to decrypt the encrypted content (EKB and $K_{EKBC}(KC)$ described below with reference to Fig. 5). In step S26, the CPU 21 of the content server 3 transmits the content encrypted by the processing in step S24 and the data formatted in which the key information is added to the header by the processing in step S25 using the communication unit 29 via the Internet 2 to the client 1 having accessed the content server 3.

Fig. 5 is an illustration of the structure of the format of content provided by the content server 3 to the client 1. As shown in the illustration, basically the format includes the header and data.

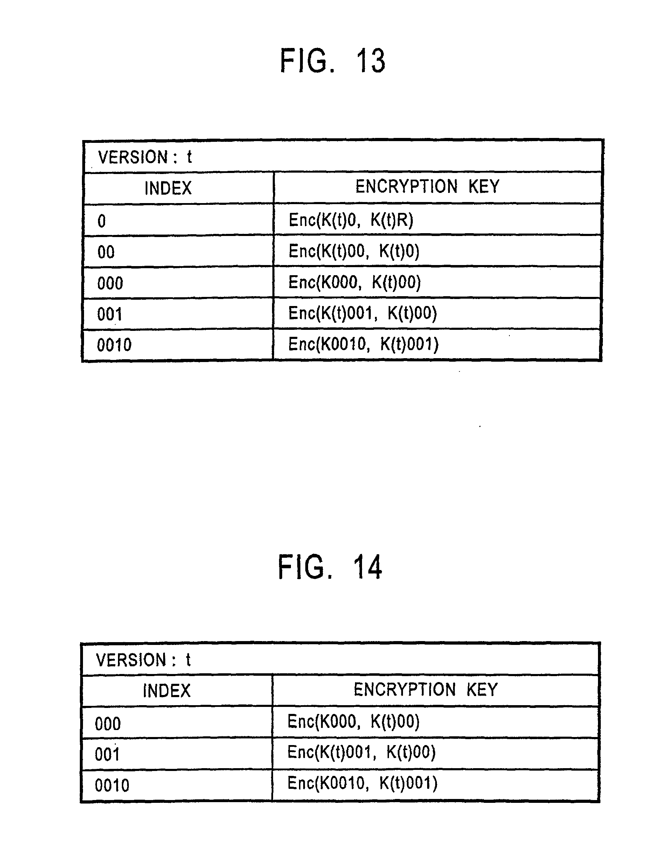

The header includes content information, URL (Uniform Resource Locator), an enabling key block (EKB), data $K_{EKBC}(Kc)$ serving as a content key Kc encrypted using a key $K_{EKBC}$ generated from the EKB, attributes of content, and signatures. The EKB will be described below with reference to Figs. 13 and 14.

The content information includes the content ID (CID) serving as identification information for identifying content data formatted as data and information indicating the codec format of the content.

The URL is address information required to gain access to obtain a necessary usage right for using the content. In the case of the system shown in Fig. 1, specifically the URL is the address of the license server 4, which is required to receive a usage right.

The attributes of the content are information concerning the content. The attributes of the content include the content ID, record company ID serving as identification information for identifying the provider of the content, and artist ID serving as identification information for identifying the artist. In this embodiment, the attributes are used to specify the content to be used by the usage right.

The signatures are digital signatures associated with the attributes of the content.

The data includes an arbitrary number of encryption blocks. Each of the encryption blocks includes an initial vector (IV), seed, and data $E_{K'c}$ (data) produced by encrypting the content data using a key K'c.

The Key K'c is, as shown by the following equation, a value computed by applying the content key Kc and the random-number seed to a hash function:

$$K'c = Hash(Kc, Seed)$$

The initial vector IV and the seed are set to different values in each encryption block.

The data of the content is encrypted in units of eight bytes. The data of the content is encrypted in a CBC (Cipher Block Chaining) mode in which the subsequent eight bytes are encrypted using the result of encryption of the previous eight bytes.

In the CBC mode, when the first eight bytes of content data are to be encrypted, there is no result of encryption of eight bytes prior to these first eight bytes. The first eight bytes of content data are thus encrypted using the initial vector IV serving as initial values.

With the encryption in the CBC mode, even when one encryption block is decrypted, its influence does not extend to the other encryption blocks.

Alternatively, the content may be encrypted in another encryption mode.

In the above described manner, the client 1 freely obtains content from the content server 3 free of charge. Therefore, many pieces of content can be distributed.

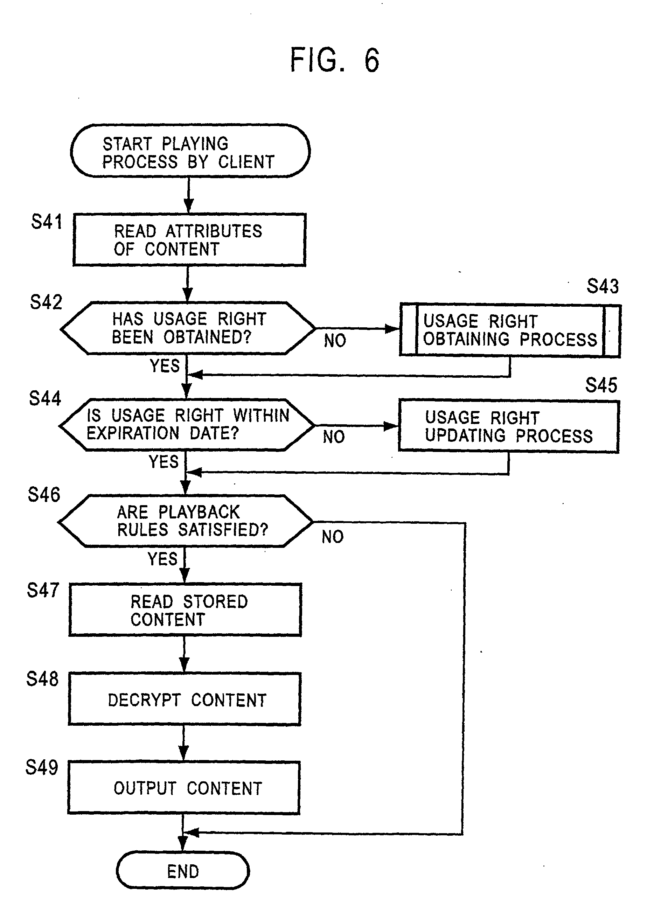

In order that each client 1 uses obtained content, the client 1 needs to have a usage right proving that the use of the content is permitted. Referring to Fig. 6, a content playing process by the client 1 will now be described.

In step S41, the CPU 21 of the client 1 obtains the content identifying information (CID) specified by the user by operating the input unit 26. This identifying information includes, for example, the title of the content, the number attached to each piece of the stored content, and the like.

When the content is specified, the CPU 21 reads attributes of the content. The attributes are, as shown in Fig. 5, described in the header of the content.

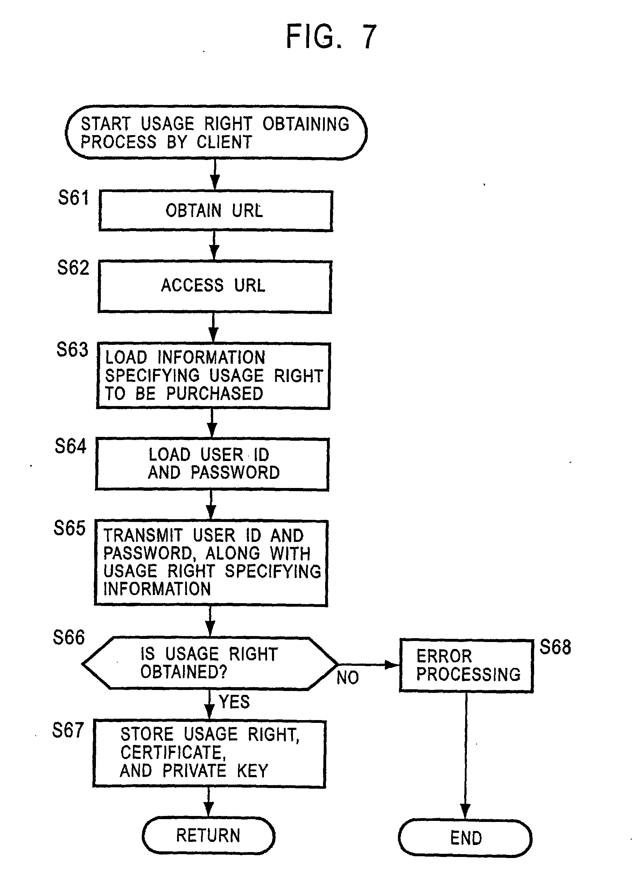

In step S42, the CPU 21 determines whether the client 1 has already obtained a usage right whose content rules included therein are satisfied by the attributes read in step S41 and has already stored this usage right in the storage unit 28. When such a usage right has not been obtained yet, in step S43, the CPU 21 performs a usage right obtaining process. The details of the usage right obtaining process will be described below with reference to a flowchart of Fig. 7.

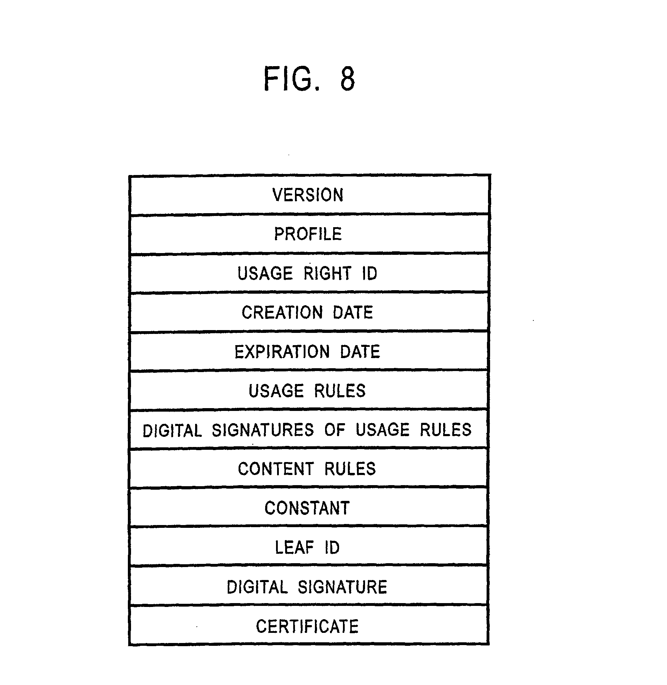

When it is determined in step S42 that the usage right has already been obtained, or when the usage right obtaining process is performed in step S43 and the usage right is obtained, in step S44, the CPU 21 determines whether the obtained usage right is within its expiration date. Whether the usage right is within the expiration date is determined by comparing the date defined in the usage right (see Fig. 8 described below) with the current date and time kept by the timer 20. When it is determined that the expiration date of the usage right has already passed, in step S45, the CPU 21 performs a usage right updating process.

When it is determined in step S44 that the usage right is within the expiration date, or when the usage right is updated in step S45, in step S46, the CPU 21 reads usage rules included in the usage right and the usage status (described below), which are stored in the storage unit 28, and determines whether playback rules are satisfied by the usage rules and the usage status.

When it is determined in step S46, on the basis of the usage rules included in the usage right and the usage status, that the content is permitted to be played, in step S47, the CPU 21 reads the encrypted content data from the storage unit 28 and stores the encrypted content data in the RAM 23. In step S48, the CPU 21 supplies the encrypted content data stored in the RAM 23 in units of encryption blocks arranged in the data shown in Fig. 5 to the encryption/decryption unit 24, which in turn decrypts the encrypted content data using the content key Kc.

A specific example of a method of obtaining the content key Kc will be described below with reference to Figs. 13 and 14. Using a device node key (DNK), the key $K_{EKBC}$ included in the EKB (Fig. 5) is obtained. Using the key $K_{EKBC}$, the content key Kc is obtained from the data $K_{EKBC}$ (Kc) (Fig. 5).

In step S49, the CPU 21 supplies the content data decrypted by the encryption/decryption unit 24 to the codec 25 to be decoded. The CPU 21 supplies the data decoded by the codec 25 from the input/output interface 32 to the output unit 27, D/A-converts the data, and outputs the converted data via the speaker.

When it is determined in step S46, on the basis of the usage rules included in the usage right and the usage status, that the content is prohibited from being played, the content is not output. The process is terminated.

With reference to the flowchart of Fig. 7, the usage right obtaining process performed in step S43 of Fig. 6 will be described in detail.

By registering itself in the license server, the client 1 obtains service data including a leaf ID, a DNK (Device Node Key), a pair of a private key and a public key of the client 1, a public key of the license server, and a certificate of each public key.

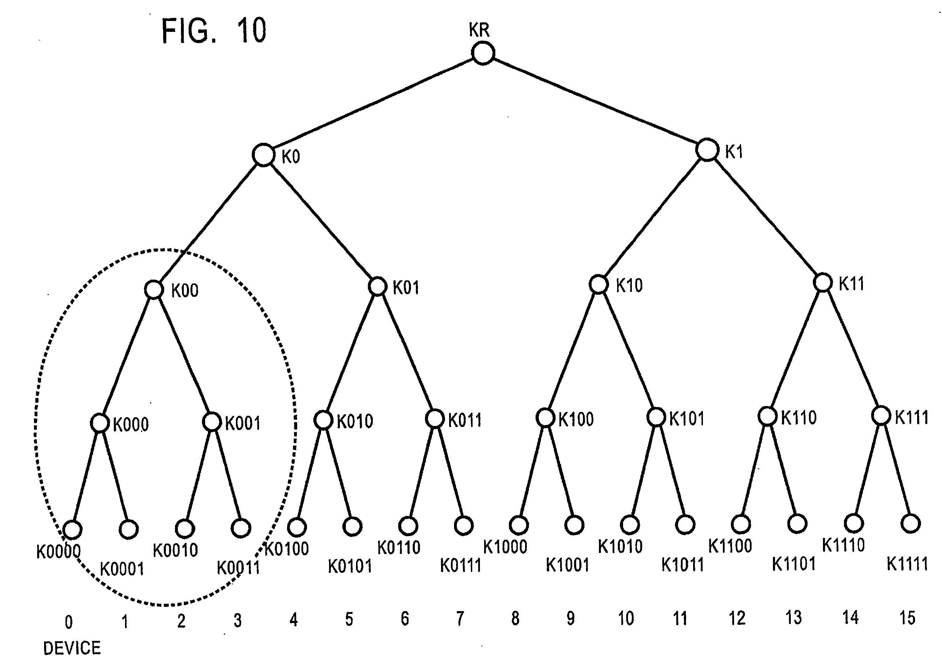

The leaf ID indicates identification information allocated to each client. The DNK is a necessary device node key for decrypting the content key Kc encrypted by the EKB (enabling key block) included in the content (described below with reference to Fig. 10).

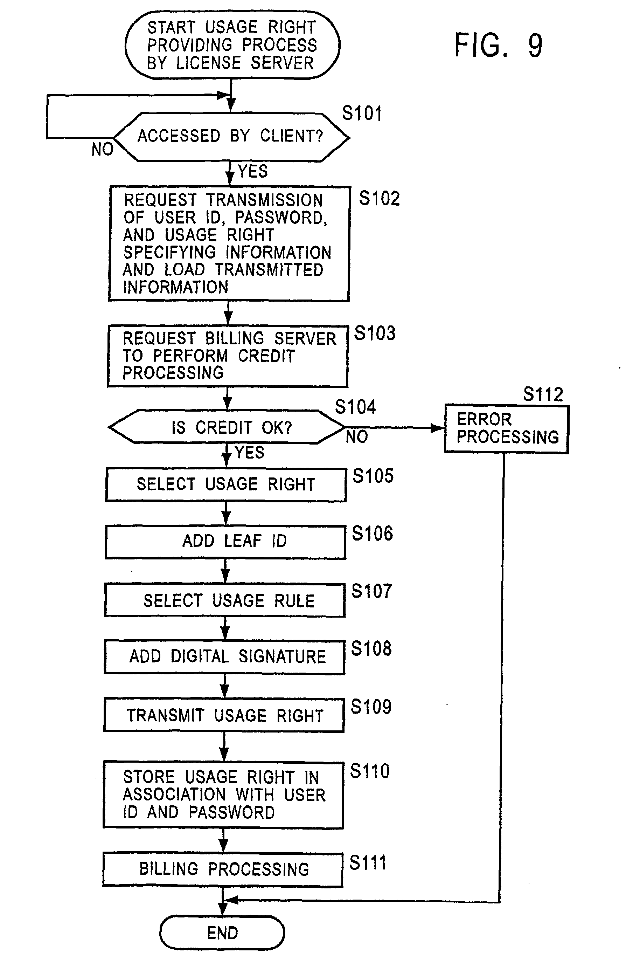

In step S61, the CPU 21 obtains the URL described in the header of the content. As described above, the URL is the address to gain access to obtain a necessary usage right for using the content. In step S62, the CPU 21 accesses the URL obtained in step S61. Specifically, the communication unit 29 accesses the license server 4 via the Internet 2. In response to the access, the license server 4 transmits a list of usage rights to the client 1. Also, the license server 4 requests the client 1 to input usage right specifying information for specifying the usage right to be purchased (necessary usage right for using the content), user ID, and password (step S102 of Fig. 9 described below). The CPU 21 displays the request on the display unit of the output unit 27. On the basis of the displayed request, the user operates the input unit 26 to input the usage right specifying information, user ID, and password. The user ID and password are obtained in advance by the user of the client 1 by accessing the license server 4 via the Internet 2.

In steps S63 and 64, the CPU 21 loads the usage right specifying information, user ID, and password input by the input unit 26. In step S65, the CPU 21 controls the communication unit 29 to transmit the input user ID, password, usage right specifying information, and a usage right request including the leaf ID included in the service data (described below) to the license server 4 via the Internet 2.

As will be described below with reference to Fig. 9, the license server 4 transmits the usage right on the basis of the user ID, password, and usage right specifying information (step S109). Alternatively, if the rules are not satisfied, the license server 4 transmits no usage right (step S112).

In step S66, the CPU 21 determines whether the usage right has been transmitted from the license server 4. When the usage right has been transmitted, in step S67, the CPU 21 supplies and stores the usage right in the storage unit 28.

When it is determined in step S66 that no usage right is transmitted, in step S68, the CPU 21 performs the error processing. Specifically, since the usage right for using the content is not obtained, the CPU 21 prohibits the content playing process.

As described above, each client 1 can use content only after having obtained a necessary usage right for using the content.

Alternatively, each user may perform the usage right obtaining process shown in Fig. 7 prior to obtaining the content.

The usage right provided to the client 1 includes, as shown in Fig. 8, usage rules, a leaf ID, a digital signature, and the like.

A version is information describing the version of the usage right by separating a major version and a minor version by a dot.

A profile, which is described using a decimal integer, is information for defining the limitation of a method of describing the usage right.

A usage right ID, which is described using a hexadecimal constant, is identification information for identifying the usage right.

A creation date indicates the date on which the usage right is created.

An expiration date indicates the expiration date of the usage right. The expiration date 23:59:59 of the year 9999 indicates that there is no limit on the expiration date.

The usage rules include information indicating the expiration date for using the content on the basis of the usage right; the expiration date for playing the content on the basis of the usage right; the maximum number of times the content can be played; the number of times the content can be copied on the basis of the usage right (the number of permitted copies); the maximum number of times the content can be checked out; whether the content can be recorded on a CD-R on the basis of the usage right; the number of times the content can be copied to a PD (Portable Device); whether the usage right can be transferred; and whether it is obliged to keep the usage log.

Digital signatures of the usage rules are associated with the usage rules.

Constants are referred to by the usage rules or the usage status.

The leaf ID is identification information for identifying the client.

The digital signature is associated with the overall usage right.

A certificate includes the public key of the license server.

The storage unit 28 of the client 1 stores, in addition to the usage rules of the usage right, the usage status serving as information indicating the status of the content and the usage right. The usage status includes information indicating the number of times the content is played on the basis of the associated usage right; the number of times the content is copied; the number of times the content is checked out; the date on which the content is played for the first time; the number of times the content is recorded on a CD-R; and record information concerning the content or the usage right.

Whether the rules of playing the content are satisfied is determined in step S46 of Fig. 6 on the basis of the usage rules included in the usage right and the usage status stored, along with the usage right, in the storage unit 28. For example, when the number of times the content is played, which is stored in the usage status, is less than the maximum number of times the content can be played, which is included in the usage rule, it is determined that the playback rule is satisfied.

With reference to a flowchart of Fig. 9, the usage right providing process by the license server 4, which is performed in association with the usage right obtaining process by the client 1, which is shown in Fig. 7, will now be described.

In step S101, the CPU 21 of the license server 4 is queued until the license server 4 is accessed by the client 1. When the license server 4 is accessed by the client 1, in step S102, the CPU 21 transmits a list of usage rights, including information concerning each usage right, to the client 1 having accessed the license server 4. Also, the CPU 21 of the license server 4 requests the client 1 to transmit the user ID, password, and usage right specifying information. As described above, when the client 1 transmits the user ID, password, leaf ID, and usage right specifying information (may be the usage right ID) by the processing in step S65 of Fig. 7, the CPU 21 of the license server 4 receives these pieces of information via the communication unit 29 and loads the received information.

In step S103, the CPU 21 of the license server 4 accesses the billing server 5 via the communication unit 29 and requests the billing server 5 to perform the credit processing of the user associated with the user ID and password. In response to the credit processing request from the license server 4 via the Internet 2, the billing server 5 investigates the past payment record of the user associated with the user ID and password and determines whether the user has failed to pay the fee for a usage right in the past. If no such record exists, the CPU 21 transmits the credit result allowing the grant of the usage right. If a payment failure record exists, the CPU 21 transmits the credit result prohibiting the grant of the usage right.

In step S104, the CPU 21 of the license server 4 determines whether the credit result from the billing server 5 allows the grant of the usage right. When the grant of the usage right is allowed, in step S105, the CPU 21 obtains, from usage rights stored in the storage unit 28, the usage right associated with the usage right specifying information loaded by the processing in step S102. Each of the usage rights stored in the storage unit 28 includes beforehand information, such as the usage right ID, version, creation date, and expiration date. In step S106, the CPU 21 adds the received leaf ID to the usage right. In step S107, the CPU 21 selects the usage rule associated with the usage right selected in step S105. Alternatively, when the user has specified the usage rule by the processing in step S102, the specified usage rule is added, where necessary, to the prepared usage rules. The CPU 21 adds the selected usage rule to the usage right. Alternatively, the usage rule may be added in advance to the usage right.

In step S108, the CPU 21 signs the usage right using a private key of the license server and adds a certificate including the public key of the license server to the usage right, thus generating the usage right arranged as shown in Fig. 8.

In step S109, the CPU 21 of the license server 4 causes the communication unit 29 to transmit the usage right (arranged as shown in Fig. 8) via the Internet 2 to the client 1.

In step S110, the CPU 21 of the license server 4 stores the usage right (including the usage rule and the leaf ID), which has been transmitted by the processing in step S109, in the storage unit 28 in association with the user ID and password loaded by the processing in step S102. In step S111, the CPU 21 performs the billing processing. Specifically, the CPU 21 requests, using the communication unit 29, the billing server 5 to bill the user associated with the user ID and password. In response to the billing request, the billing server 5 bills the user. As described above, when the user who has been billed for the fee does not pay the fee, from this point onward, the user is not allowed to receive a usage right even when the user requests the grant of the usage right.

Specifically, in this case, the billing server 5 transmits the credit result prohibiting the grant of the usage right. The process proceeds from step S104 to step S112. The CPU 21 performs the error processing. Specifically, the CPU 21 of the license server 4 controls the communication unit 29 to transmit a message indicating that the grant of the usage right is prohibited to the client 1 having accessed the license server 4. The process is terminated.

In this case, as described above, since the client 1 cannot receive the usage right, the client 1 is prohibited from using the content (decrypting the encrypted content and playing the content).

In the present invention, as shown in Fig. 10, devices and keys are managed on the basis of the principle of broadcast encryption. Keys are arranged in a hierarchical tree structure having leafs at the bottom level being associated with keys unique to individual devices. For hierarchical-tree-structure key management used in the system of the present invention, see Japanese Unexamined Patent Application Publication No. 2001-352321. In the example shown in Fig. 10, keys associated with 16 devices 0 to 15 are generated.

Each key is defined associated with a node of the tree structure, which is denoted by a circle in the illustration. In the example, a root key KR is defined associated with a root node at the top level. Keys K0 and K1 are defined associated with nodes at the second level. Keys K00 to K11 are defined associated with nodes at the third level. Keys K000 to K111 are defined associated with nodes at the fourth level. Keys K0000 to K1111 are defined associated with leafs (device nodes) serving as nodes at the bottom level.

Since the keys are arranged in the hierarchical structure, for example, the key on top of key K0010 and key 0011 is K001, and the key on top of key K000 and K001 is K00. Similarly, the key on top of key K00 and key K01 is K0, and the key on top of K0 and K1 is KR.

A key for using content is managed by keys associated with nodes on a path from each device node (leaf) at the bottom level to the root node at the top level. For example, a device associated with leaf 3 manages a key for using content by keys K0011, K001, K00, K0, and KR on the corresponding path.

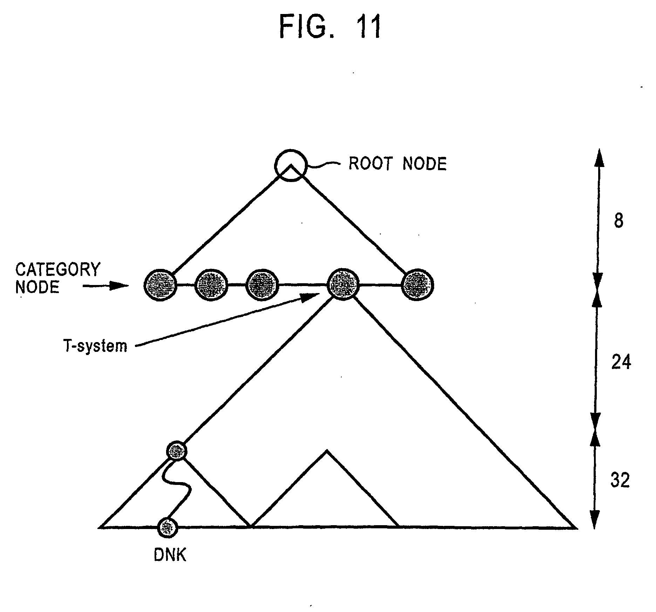

In the system of the present invention, as shown in Fig. 11, device keys and content keys are managed by a key system based on the principle shown in Fig. 10. In the example shown in Fig. 11, nodes at 8 + 24 + 32 levels are arranged in a tree structure, and nodes from the root node to nodes at the eighth level below the root node are associated with categories. The term category refers to, for example, the category of devices using semiconductor memories, such as memory sticks, or the category of devices receiving digital broadcast programs. One of these category nodes is associated with the present system serving as a system for managing licenses (referred to as a T system).

Specifically, keys associated with nodes at 24 levels below the node associated with the T system are associated with service providers or services offered by the service providers. In this example, $2^{24}$ (approximately 16 M) service providers or services can be defined. Using the bottom 32 levels, $2^{32}$ (approximately 4 G) users (or clients 1) can be defined. Keys associated with nodes on a path from each node at the bottom level or the 32nd level to the node associated with the T system constitute a DNK (Device Node Key). The ID associated with each leaf at the bottom level is the leaf ID.

A content key that has encrypted content is encrypted by an updated root key KR'. An updated node key at a higher level is encrypted using an updated node key at a lower level, which is most adjacent to the updated node key at the higher level. This encrypted node key is arranged in an EKB (described hereinafter with reference to Figs. 13 and 14). In the EKB, an updated node key at a level above the end of the EKB is encrypted by a node key or leaf key at the end of the EKB, and the encrypted node key is arranged in the EKB. Using any key included in the DNK described in service data, the client 1 decrypts an updated node key at a level higher than the used key, which is most adjacent to the used key and which is described in the EKB (Figs. 13 and 14) distributed along with content data. Using the decrypted key, the client 1 decrypts an updated node key at a level higher than this key described in the EKB. The client 1 performs the similar processing one after another to obtain the updated root key KR'.

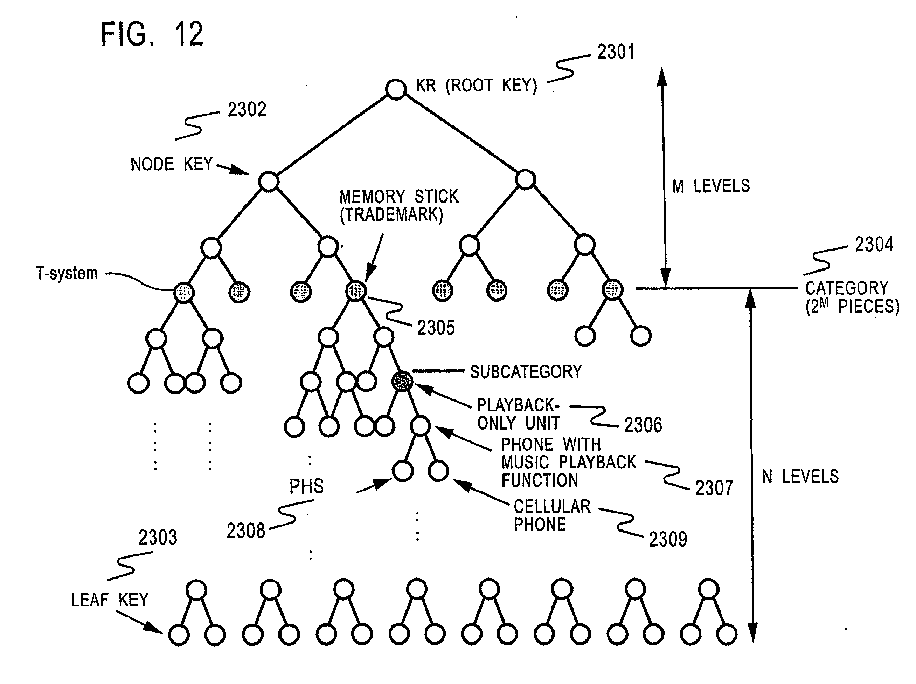

Fig. 12 shows a specific example of classification of categories in the hierarchical tree structure. Referring to Fig. 12, root key KR2301 is set at the top level of the hierarchical tree structure; node keys 2302 are set at the intermediate levels below the top level; and leaf keys 2303 are set at the bottom level. Devices each hold a device node key (DNK) consisting of the corresponding leaf key, a series of node keys from the leaf key to the root key, and the root key.

Predetermined nodes at the M-th level from the top (M = 8 in the example shown in Fig. 11) are set as category nodes 2304. Specifically, nodes at the M-th level are set as device setup nodes belonging to specific categories. Let one node at the M-th level be the apex. Nodes and leafs at the (M+1)-th level and below are regarded as nodes and leafs concerning devices included in that category.

For example, a node 2305 at the M-th level in Fig. 12 is set to the category [memory stick (trademark)]. A series of nodes and leafs below the node 2305 is set as nodes and leafs dedicated to this category including various devices using memory sticks. Specifically, nodes and leafs below the node 2305 are defined as a set of nodes and leafs associated with devices defined belonging to the category "memory stick".

A node at a level a few levels below the M-th level is set as a subcategory node 2306. In the example of Fig. 12, the [playback-only unit] node 2306 is set at a level two levels below the category [memory stick] node 2305. The [playback-only unit] node 2306 is a subcategory node included in the category of devices using memory sticks. Below the playback-only unit node 2306 serving as the subcategory node, a node 2307 is set associated with a phone with a music playback function, which is included in the category of playback-only units. Below the node 2307, a [PHS] node 2308 and a [cellular phone] node 2309 are set, which are included in the category of phones with a music playback function.

Categories and subcategories may be set associated not only with the types of devices, but also with, for example, nodes managed independently by a particular manufacturer, content provider, payment institute, etc., that is, in arbitrary units of, for example, processes, jurisdiction sections, or services provided (hereinafter these are collectively referred to as entities). For example, let one category node be the apex node dedicated to game machines XYZ sold by a game machine manufacturer. Each of the game machines XYZ sold by the manufacturer may store node keys and leaf keys at levels below the apex node. Subsequently, generation and distribution of an enabling key block (EKB) including these node keys and leaf keys below the apex node key enable distribution of encrypted content and distribution and updating of various keys to only those devices that are below the apex node.

When nodes below an apex node are set as nodes associated with categories or subcategories defined associated with this apex node, a manufacturer or content provider that manages the apex node of category levels or subcategory levels independently generates an enabling key block (EKB) having the apex node as the apex of the EKB and distributes this EKB to devices below the apex node. Accordingly, a key may be updated without influencing devices that do not belong to the apex node and that belong to a node of another category.

When it becomes apparent at a particular time t that keys K0011, K001, K00, K0, and KR held by a device 3 are analyzed by a hacker and exposed to the outside, the device 3 needs to be separated from the system (group of devices 0, 1, 2, and 3) to subsequently protect data transferred within the system. To this end, the node keys K001, K00, K0, and KR need to be updated to new keys K(t)001, K(t)00, K(t)0, and K(t)R, respectively, and these updated keys need to be sent to the devices 0, 1, and 2. In this example, K(t)aaa indicates an updated key Kaaa in the generation t.

A method of distributing updated keys will now be described. Keys are updated by supplying, for example, a table including block data referred to as an enabling key block (EKB) shown in Fig. 13 to the devices 0, 1, and 2 via a network or a recording medium having the table stored therein. The enabling key block (EKB) includes encryption keys for distributing new updated keys to devices associated with leafs (nodes at the bottom level) included in the tree structure shown in Fig. 10. The enabling key block (EKB) may also be referred to as a key renewal block (KRB).

The enabling key block (EKB) shown in Fig. 13 includes block data having a data structure that can be updated only by devices for which node keys need to be updated. In the example of Fig. 13, the block data is created to distribute the updated node keys in the generation t to the devices 0, 1, and 2 in the tree structure shown in Fig. 10. As is clear from Fig. 10, the devices 0 and 1 need the updated node keys K(t)00, K(t)0, and K(t)R, whereas the device 2 needs the updated node keys K(t)001, K(t)00, K(t)0, and K(t)R.

As shown by the EKB in Fig. 13, the EKB includes a plurality of encryption keys. For example, the encryption key at the bottom level of Fig. 13 is Enc(K0010, K(t)001), which is the updated node key K(t)001 encrypted by the leaf key K0010 held by the device 2. The device 2 decrypts this encryption key using the leaf key K0010 held by itself to obtain the updated node key K(t)001. Using the updated node key K(t)001 obtained by decryption, the device 2 decrypts the encryption key Enc(K(t)001, K(t)00) at the second level from the bottom of Fig. 13 to obtain the updated node key K(t)00.

Similarly in this sequence, the device 2 decrypts the encryption key Enc(K(t)00, K(t)0) at the second level from the top of Fig. 13 to obtain the updated node key K(t)0. Using the updated node key K(t)0, the device 2 decrypts the encryption key Enc(K(t)0, K(t)R) at the first level from the top of Fig. 13 to obtain the updated root key K(t)R.

In contrast, the node key K000 is not included in the keys to be updated. The nodes 0 and 1 have the following node keys to be updated: K(t)00, K(t)0, and K(t)R. The nodes 0 and 1 each use the device keys K0000 and K0001 to decrypt the encryption key Enc(K000, K(t)00) at the third level from the top of Fig. 13 to obtain the updated node key K(t)00. Similarly in this sequence, the nodes 0 and 1 each decrypt the encryption key Enc(K(t)00, K(t)0) at the second level from the top of Fig. 13 to obtain the updated node key K(t)0. The nodes 0 and 1 each decrypt the encryption key Enc(K(t)0, K(t)R) at the first level from the top of Fig. 13 to obtain the updated root key K(t)R. In this manner, the devices 0, 1, and 2 each obtain the updated key K(t)R.

Indices in Fig. 13 denote the absolute addresses of node keys and a leaf key used as decryption keys for decrypting the encryption keys shown on the right of Fig. 13.

When the node keys K(t)0 and K(t)R at the upper levels of the tree structure shown in Fig. 10 need not be updated and when only the node key K00 needs to be updated, an enabling key block (EKB) in Fig. 14 is used to distribute the updated node key K(t)00 to the devices 0, 1, and 2.

The EKB shown in Fig. 14 can be used to distribute, for example, a new content key to be shared by a specific group. In this specific example, assume that the devices 0, 1, 2, and 3 included in a group denoted by the dotted-chain line of Fig. 10 each use a particular recording medium and need a new common content key K(t)con. In this case, encrypted data Enc(K(t)00, K(t)con) is distributed along with the EKB shown in Fig. 14. The encrypted data Enc(K(t)00, K(t)con) is produced by encrypting the new common updated content key K(t)con using K(t)00, which has updated the node key K00 shared by the devices 0, 1, 2, and 3. By this distribution, data that cannot be decrypted by a device, such as a device 4, belonging to another group is distributed.

Specifically, the devices 0, 1, and 2 each decrypt ciphertext using the key K(t)00 obtained by processing the EKB, thereby obtaining the content key K(t)con at the time t.

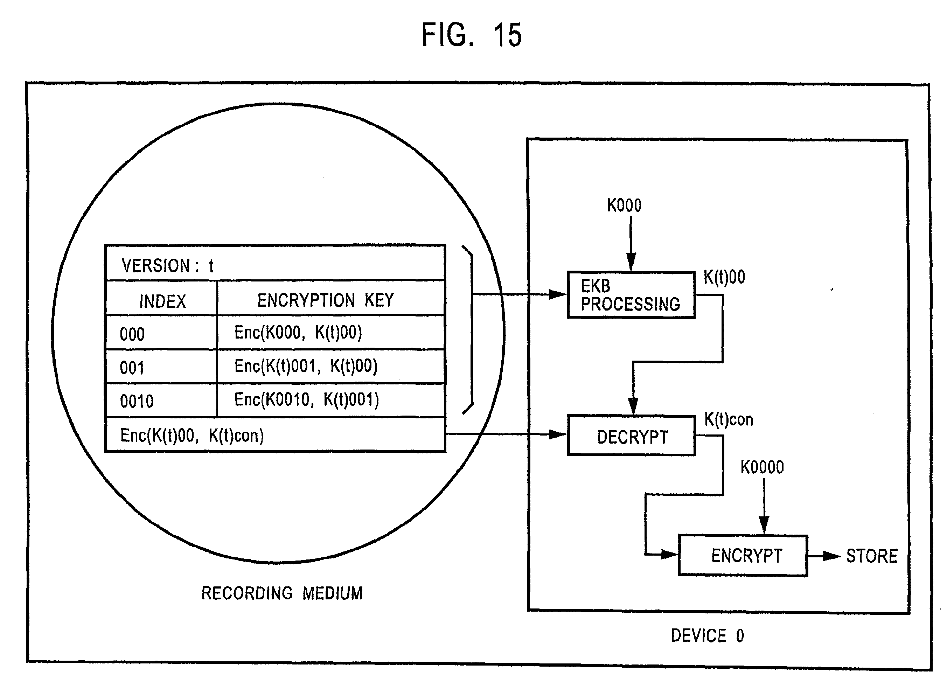

Fig. 15 shows an example of a process of obtaining the content key K(t)con at the time t, which is performed by the device 0 that has received, via a recording medium, the encrypted data Enc(K(t)00, K(t)con), which is produced by encrypting the new common content key K(t)con using K(t)00, and the EKB shown in Fig. 14. Specifically, in this example, message data encrypted by the EKB is the content key K(t)con.

As shown in Fig. 15, the device 0 uses the EKB in the generation t, which is stored in the recording medium, and the node key K000, which is stored in advance in the device 0, to generate the node key K(t)00 by the EKB processing similar to that described above. Using the decrypted updated node key K(t)00, the device 0 decrypts the updated content key K(t)con. To use the decrypted updated content key K(t)con afterwards, the device 0 encrypts the updated content key K(t)con using the leaf key K0000, which is held only by the device 0, and stores the encrypted content key K(t)con.

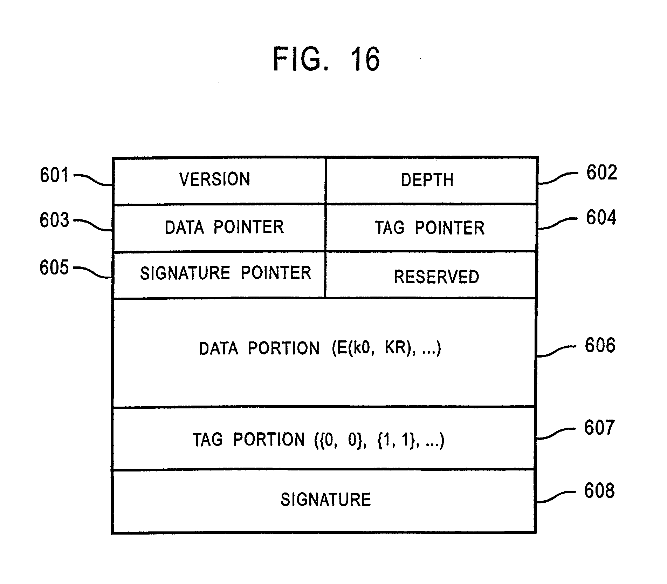

Fig. 16 shows an example of the format of the enabling key block (EKB). A version 601 is an identifier indicating the version of the enabling key block (EKB). The version has a function of identifying the most recent EKB and a function of indicating the association relationship between the EKB and the content. A depth indicates the number of levels of the hierarchical tree associated with a device to which the enabling key block (EKB) is distributed. A data pointer 603 is a pointer indicating the position of a data portion 606 of the enabling key block (EKB). A tag pointer 604 is a pointer indicating the position of a tag portion 607, and a signature pointer 605 is a pointer indicating the position of a signature 608.

The data portion 606 stores, for example, data produced by encrypting node keys to be updated. For example, the data portion 606 stores the encryption keys, as shown in Fig. 15, concerning the updated node keys.

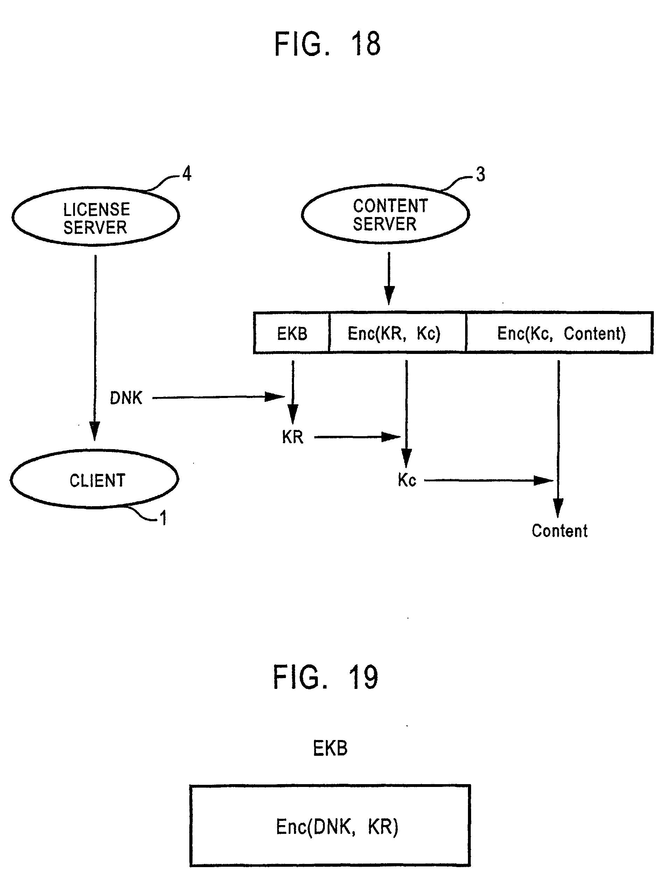

The tag portion 607 includes tags indicating the positional relationship among the encrypted node keys and leaf key stored in the data portion 606. A rule of attaching the tags will be described with reference to Fig. 18.

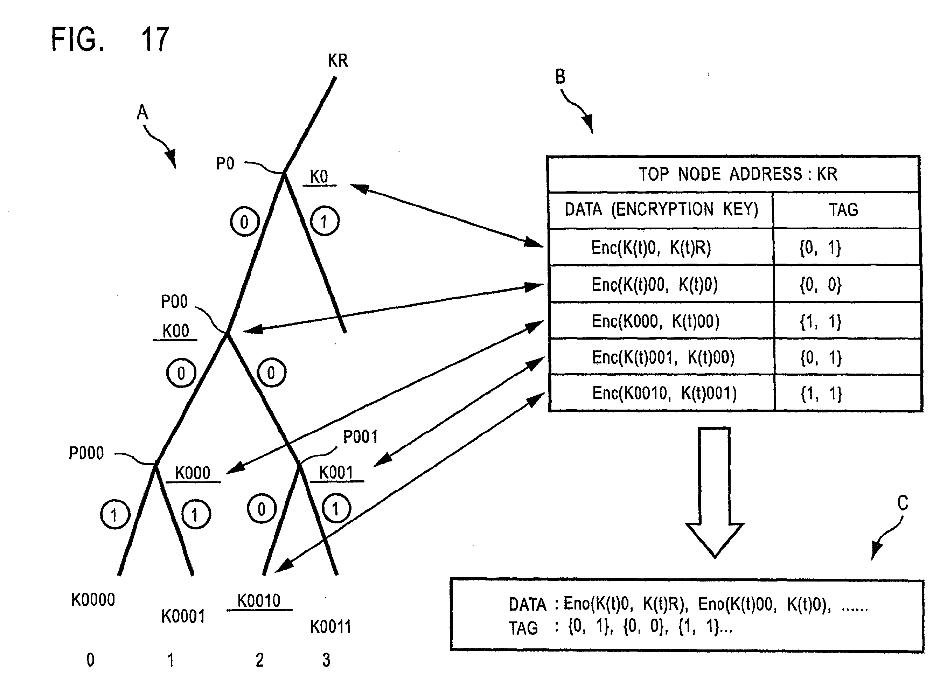

In Fig. 17, an example is shown in which data which is the enabling key block (EKB) illustrated in Fig. 13 is transmitted. The data in this case is arranged as shown in the table of Fig. 17B. The address of a top node included in the encryption keys is referred to as the top node address. Since the data includes the updated root key K(t)R in this example, the top node address is KR. For example, the data at the top level Enc (K(t)0, K(t)R) is associated with the position P0 shown in the hierarchical tree shown in Fig. 17A. Data at the subsequent level is Enc(K(t)00, K(t)0) associated with the position P00 in the lower left of the previous data in the tree. When there is data positioned below a predetermined position in the tree structure, the tag is set to 0. Otherwise, the tag is set to 1. The tag is set as {left (L) tag, right (R) tag}. Since there is data at the position P00 in the lower left of the position P0 associated with the data at the top level Enc(K(t)0, K(t)R) in Table B, L tag = 0. Since there is no data on the right, R tag = 1. In this manner, all pieces of data are tagged, thus forming a data sequence and a tag sequence shown in Fig. 17C.

The tag is attached indicating the position of the corresponding data Enc(Kxxx, Kyyy) in the tree structure. Pieces of key data Enc(Kxxx, Kyyy) ... stored in the data portion 66 are simply a series of pieces of encrypted key data. When the key data is tagged as described above, the position in the tree of each encryption key stored as the data becomes detectable. Instead of tagging the data, as shown in Fig. 15, the data structure may be defined by, for example, the following node indices associated with the encrypted data:

    0:      Enc(K(t)0, K(t)R)
    00:     Enc(K(t00, K(t)0)
    000:    Enc(K((t)000, K(t)00)

... When the structure is defined using such indices, the indices are redundant data, and the amount of data increases, which is not desirable in distribution via a network or the like. In contrast, when the above-described tags are used as index data indicating the positions of the keys, the positions of the keys become detectable with a smaller amount of data.

Referring back to Fig. 16, the EKB format will be described in further detail. The signature 608 is a digital signature created by, for example, a key management center (license server 4), a content provider (content server 3), a payment institute (billing server 5), etc., which has issued the enabling key block (EKB). A device having received the EKB verifies the signature included in the EKB to determine whether the obtained enabling key block (EKB) is issued by an authenticate enabling key block (EKB) issuer.

The above-described process of using content supplied by the content server 3 on the basis of a usage right supplied by the license server 4 is summarized in Fig. 18.

Specifically, content is supplied by the content server 3 to the client 1, and a license is given by the license server 4 to the client 1. A set of service data supplied at the time of registration of the client 1 in the license server 4 and a usage right, which is information for permitting the use of particular content, is referred to as a license. Content is encrypted by a content key Kc (Enc(Kc, Content)). The content key Kc is encrypted by an updated root key KR' (key obtainable from an EKB; associated with $K_{EKBC}$ in Fig. 5) (Enc(KR', Kc)). Along with the EKB, the encrypted content key Kc (Enc(KR', Kc)) is added to the encrypted content and provided to the client 1.

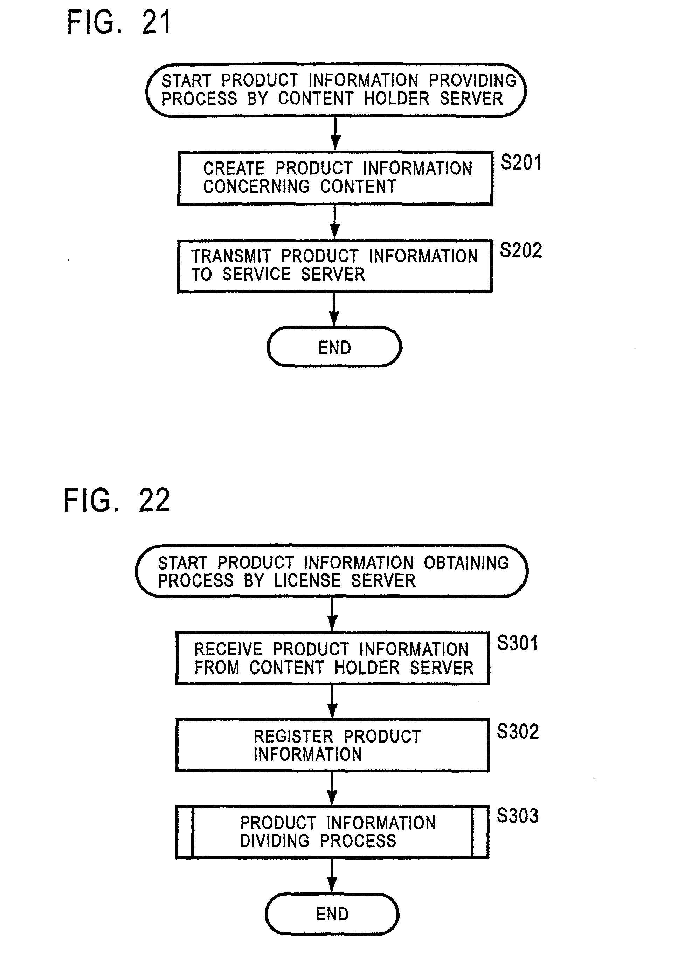

The EKB in the example shown in Fig. 18 includes, for example, as shown in Fig. 21, the updated root key KR', which can be decrypted by a DNK (Enc (DNK, KR')). Using the DNK included in the service data, the client 1 obtains the updated root key KR' from the EKB. Using the updated root key KR', the client 1 decrypts Enc(KR', Kc) to obtain the content key Kc. Using the content key Kc, the client 1 decrypts Enc(Kc, Content) to obtain the content.

By allocating a DNK to each device, the individual clients 1 can be revoked in accordance with the principle described with reference to Figs. 10 and 15.

By adding and distributing the license leaf ID to each client 1, each client 1 detects the association between the service data and the usage right. This prevents the making of an unauthorized copy of the usage right.

By distributing each client's certificate and private key as part of the service data, each end user uses the service data including the certificate and private key to create content of which an unauthorized copy is prevented.

According to the present invention, as described with reference to Fig. 11, the T system, which manages licenses, and categories of devices using various types of content are associated with category nodes. This enables one device to hold a plurality of DNKs. As a result, one device can manage plural pieces of content belonging to different categories.

Fig. 22 shows an example of this relationship. Specifically, DNK 1 is allocated to device D1 on the basis of the T system. As a result, device D1 can play content 1 including an EKB. Similarly, for example, DNK2 is allocated to device D1. As a result, device D1 can record content 2 ripped from a CD onto a memory stick. In this case, device D1 can handle both content 1 and content 2, which are distributed by different systems (T system and a device management system). On the other hand, when only one DNK is allocated to each device in a manner such that an old DNK that has been allocated to the device is deleted to allocate a new DNK, such handling cannot be achieved.

According to the present invention, key management independent in each category is thus made possible.

Instead of embedding a DNK beforehand in each device or medium, a DNK is downloaded from the license server 4 to each device or medium at the time of registration. Accordingly, a system that enables a user to purchase a key is achieved.

In a system that separately distributes content and a usage right for the content, it is preferable that the content, after being created, be usable for all purposes irrespective of usage, no matter what the usage may be. For example, it is preferable that the same content be usable in different content distribution services or for different purposes. According to the present invention, as described above, the license server 4 serving as a certifying authority distributes private keys and certificates for public keys associated with the private keys to individual users (clients 1). Each user uses the private key to create a signature and adds the signature to content to prove the integrity of the content and to prevent unauthorized alteration of the content.

Prior to using content, the client 1 must access the license server 4 to obtain a usage right. When the license server 4 is accessed by the client 1, the license server 4 provides a usage right. Prior to this, the license server 4 must obtain product information concerning the content from the content holder server 6. With reference to flowcharts of Figs. 21 and 22, processes performed in this case will now be described.

In step S201, the CPU 21 of the content holder server 6 creates product information concerning the content. In step S202, the CPU 21 transmits the product information created in step S201 via the communication unit 29 to the license server 4.

In association with this process by the content holder server 6, the license server 4 performs a process shown by the flowchart of Fig. 22.

Specifically, in step S301, the CPU 21 of the license server 4 receives the product information transmitted from the content holder server 6 (transmitted by the processing in step S202 of Fig. 21). In step S302, the CPU 21 supplies and stores the product information received by the processing in step S301 in the storage unit 28. Subsequently in step S303, the CPU 21 performs a product information (usage rule) dividing process for dividing the product information (usage rule) registered by the processing in step S302.

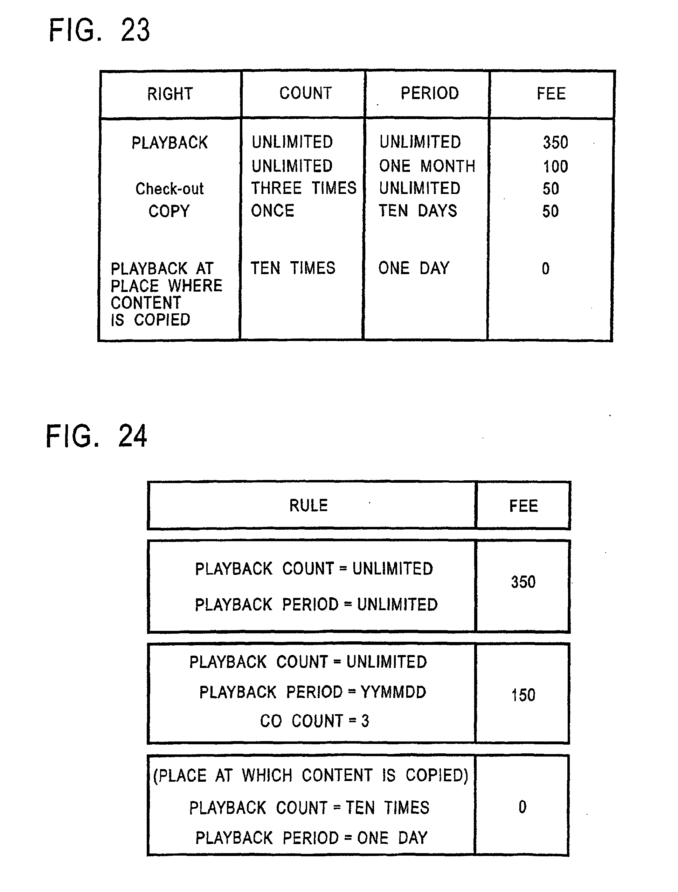

For example, assume that the product information transmitted from the content holder server 6 includes information shown in Fig. 23. In the example of Fig. 23, when a user pays a fee of 350 yen, the corresponding content becomes playable an unlimited number of times, for an unlimited period of time.

In contrast, when the user pays a fee of 100 yen, although the number of times the content can be played is unlimited, the content can be played only for one month. For one month, the user is permitted to play the content.

When the user pays additional 50 yen, the user is permitted to check out the content three times. When an additional fee of 50 yen is paid, the user is permitted to copy the content only once in a period of ten days. In this case, although the content can be played at a place where the content is copied without an additional fee (fee is 0 yen), the number of times the content can be played is limited to ten times, and the period for which the content can be played is limited to one day.

When the license server 4 receives the product information shown in Fig. 23 from the content holder server 6, the license server 4 divides the product information into sections, for example, as shown in Fig. 24.

In the example shown in Fig. 24, the product information is divided into three sections. A first section of the product information corresponds to a case in which the user has paid a fee of 350 yen. In the first section of the product information, the number of times the content can be played and the period for which the content can be played are unlimited.

A second section of the product information corresponds to a case in which the user has paid a fee of 150 yen. In the second section of the product information, although the number of times the content can be played is unlimited, the period for which the content can be played is limited such that the content can be played until YY-MM-DD (Year-Month-Day), and the content is permitted to be checked out upto three times.

A third section of the product information costs a fee of 0 yen. The details of the third section of the content information define usage rules at a place where the content is copied. The number of times the content can be played is limited to ten times, and the period for which the content can be played is limited to one day.

Since the third section of the product information costs 0 yen, the third section of the product information is distributed along with the second section of the product information.

In this manner, within the scope of a usage rule described in product information, which is permitted by the content holder server 6, the license server 4 can divide the usage rule into plural usage rules and provide a usage right including each of the separate usage rules to the client 1.

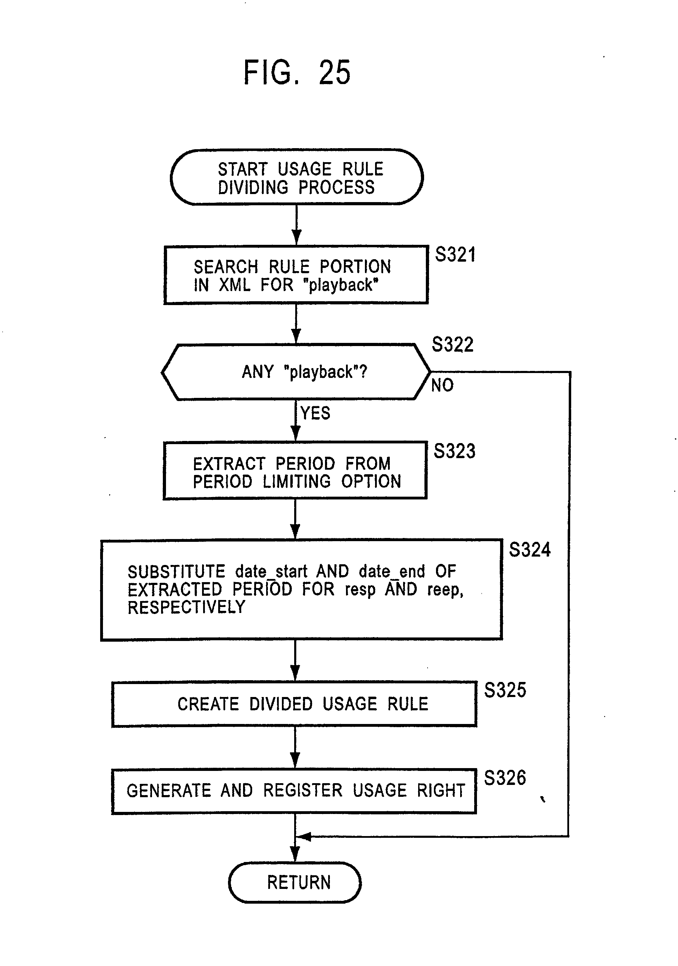

With reference to a flowchart of Fig. 25, a specific example of the product information (usage rule) dividing process in step S303 of Fig. 22 will be described.

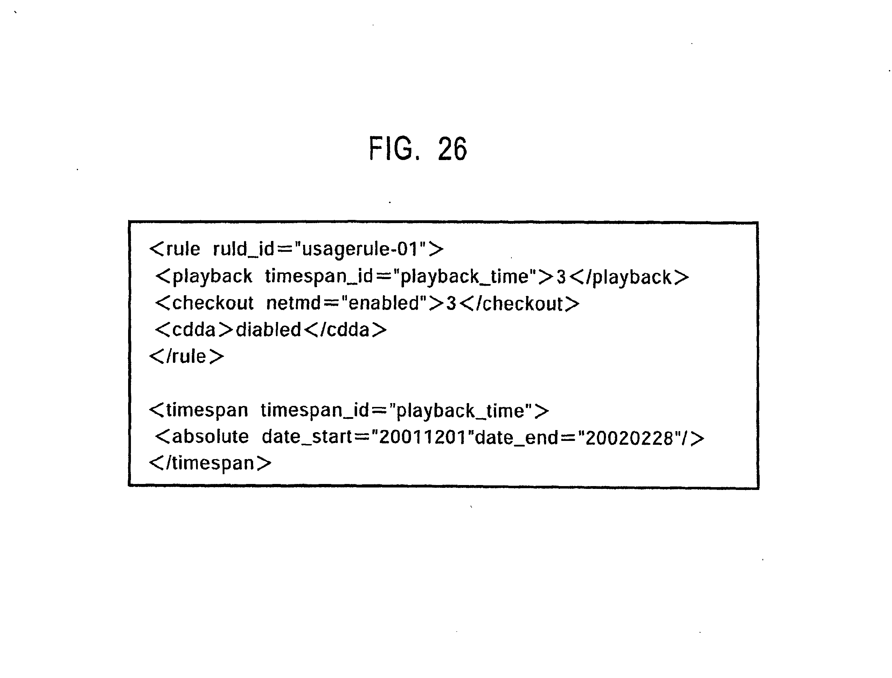

The process in Fig. 25 shows an example in which a usage rule that permits only playback is divided from a usage rule included in product information, such as that shown in Fig. 26, which is supplied by the content holder server 6 and which is stored in the storage unit 28 of the license server 4.

In the example of Fig. 26, the number of times the content can be played is three times, and the number of times the content can be checked out is three times. The playback start date is December 1, 2001, and the playback end date is February 28, 2002.

In step S321, the CPU 21 searches a rule portion (written in XML (Extensible Markup Language)) of the product information, which is received from the content holder server 6 and which is stored in the storage unit 28, for a "playback" element.

In step S322, the CPU 21 determines whether "playback" exists. When "playback" exists, in step S323, the CPU 21 extracts a period from a period limiting option (timespan_id). In the example of Fig. 26, the period from December 1, 2001 to February 28, 2002 is extracted.

In step S324, the CPU 21 substitutes date_start (start date) and date_end (end date) of the period extracted by the processing in step S323 for the variables resp and reep, respectively. The variable resp represents the date on which playback can start, and the variable reep represents the data on which playback can end.

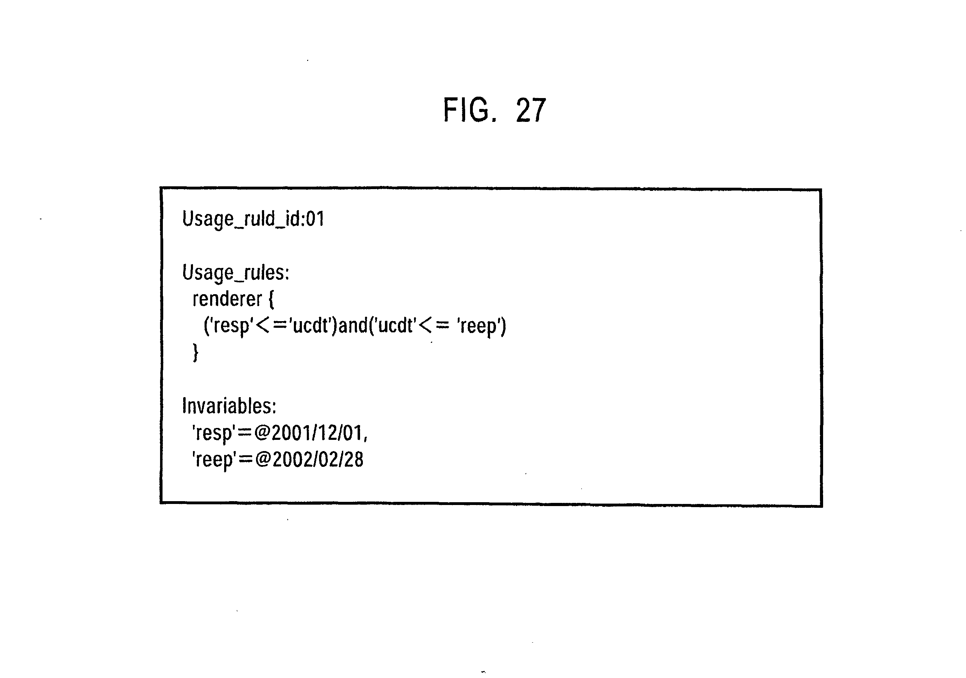

In step S325, the CPU 21 creates a divided usage rule on the basis of the data generated by the processing in step S324. As a result, for example, a usage rule shown in Fig. 27 is created.

In the example of Fig. 27, the content can be used for the period from December 1, 2001 to February 28, 2002.

In step S326, the CPU 21 generates a usage right including the usage rule created by the processing in step S325, content rules included in the product information, usage right ID, version, expiration date, etc.

and registers the generated usage right in the storage unit 28.

When it is determined in step S322 that no "playback" text exists, the processing from steps S323 to step S326 is skipped.

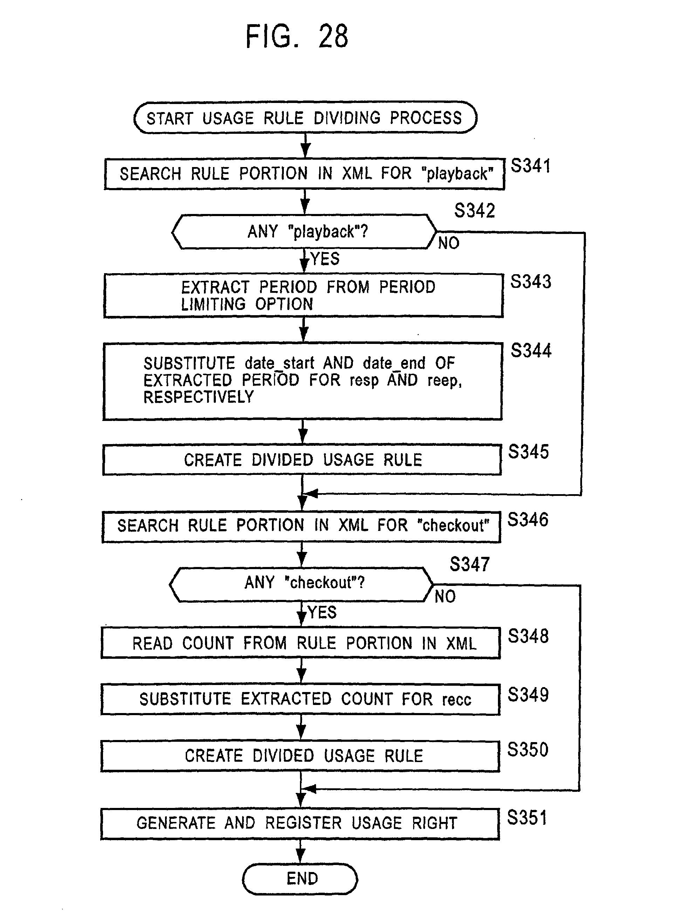

With reference to a flowchart of Fig. 28, another example of the usage rule dividing process in step S303 of Fig. 22 will be described.

This example shows a case in which a total of two usage rules, namely, a playback usage rule and a checkout usage rule, are generated from the usage rule shown in Fig. 26, which is supplied by the content holder server 6 to the license server 4.

In steps S341 to S345, the processing similar to that in steps S321 to S325 of Fig. 25 is performed. Accordingly, as described above, the usage right including the playback usage rule is divided and generated.

When it is determined that no "playback" element is retrieved in step S342, the processing from steps S343 to step S345 is skipped, and the process proceeds to step S346.

In step S346, the CPU 21 searches the rule portion written in XML (Fig. 26) for a "checkout" element. In step S347, the CPU 21 determines whether "checkout" exists. When "checkout" exists, in step S348, the CPU 21 reads the count from the rule portion in XML. In the example of Fig. 26, the count "three times" is read.

In step S349, the CPU 21 substitutes the count read in step S348 for the variable recc representing the maximum checkout count. In step S350, the CPU 21 creates a divided usage rule on the basis of the data generated by the processing in step S349. In step S351, the CPU 21 generates a usage right including the usage rule created in step S345 or step S350 and registers the usage right in the storage unit 28.

When it is determined in step S347 that no "checkout" exists, the processing from steps S348 to step S350 is skipped.

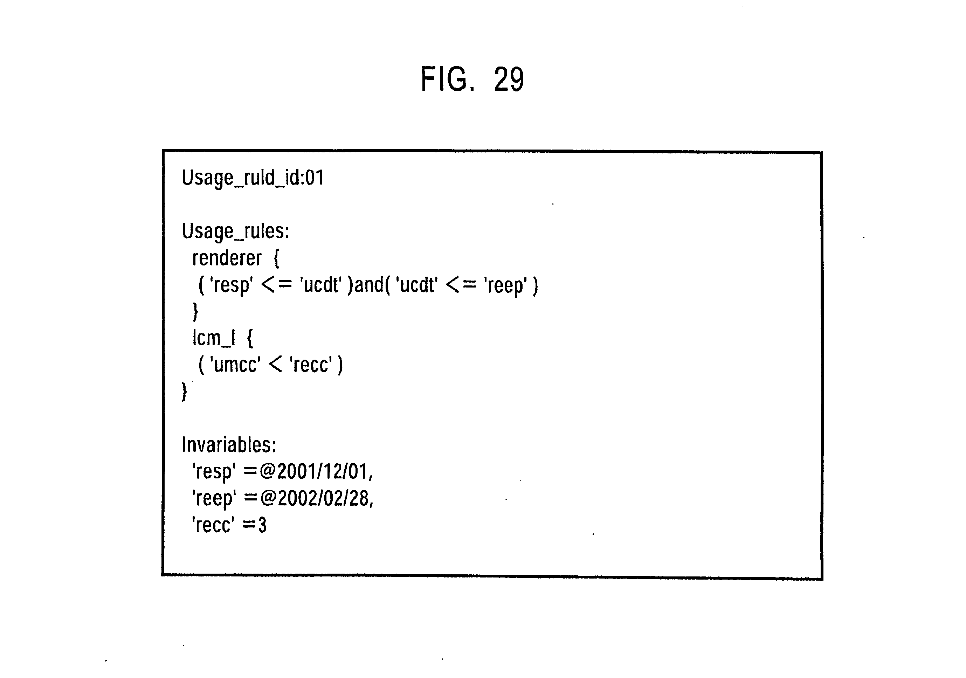

As a result, the usage right, such as that shown in Fig. 29, including the playback usage rule and the usage rule limiting the checkout count to three times is generated.

By dividing and managing a usage rule received by the license server 4 from the content holder server 6 in the above-described manner, a usage right is easily managed without placing a heavy burden of handling such a large rule on the client 1.

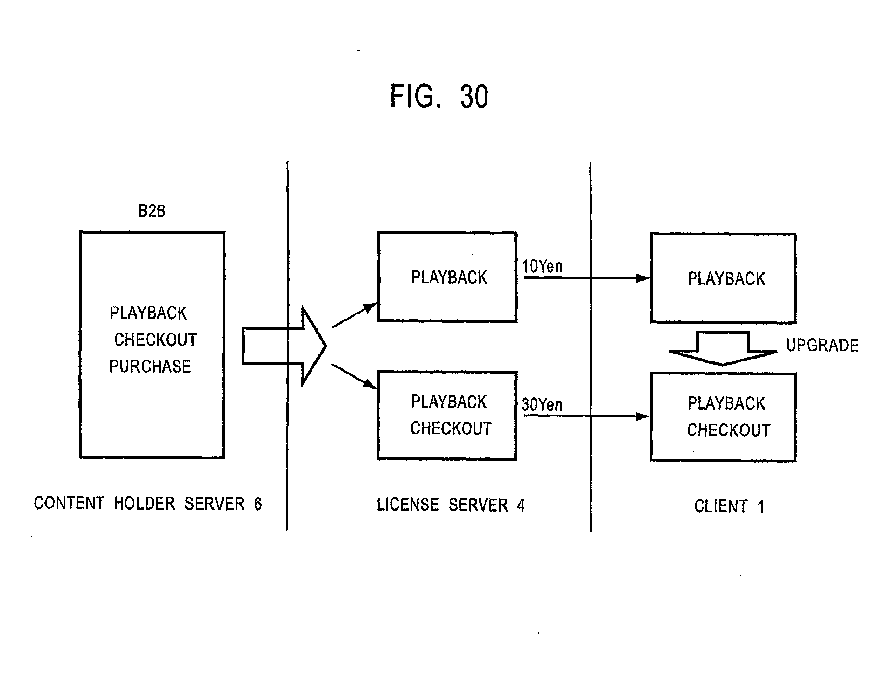

The usage rule included in the usage right can be upgraded. A process performed in this case will be described with reference to Fig. 30.

Specifically, in the example of Fig. 30, a usage right for content generated by the content holder server 6, which defines playback, checkout, and purchase of the content, is generated. The generated usage right is provided to the license server 4.

The license server 4 divides the usage right into two usage rights, namely, a usage right that only permits playback and a usage right that permits playback and checkout.

For example, the client 1 pays 10 yen to obtain the usage right that only permits playback. When the client 1 pays additional 30 yen, the client 1 obtains the usage right that additionally permits checkout. In other words, the client 1 can upgrade the playback-only usage right to the usage right permitting both playback and checkout.

In this case, the client 1 need not manage the status of the usage right, that is, the status in which the client 1 has paid 10 yen and the status in which the client 1 has paid additional 30 yen. The client 1 is simply required to purchase a new usage right. In other words, when viewed from the client 1, the playback usage right and the playback and checkout usage right are handled as different usage rights, independent of each other.

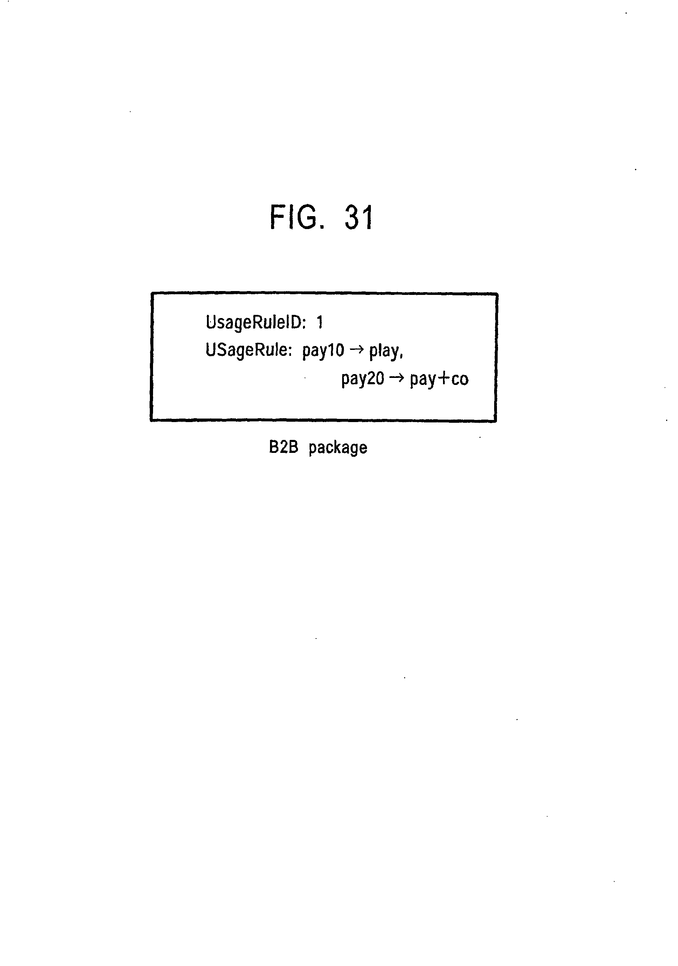

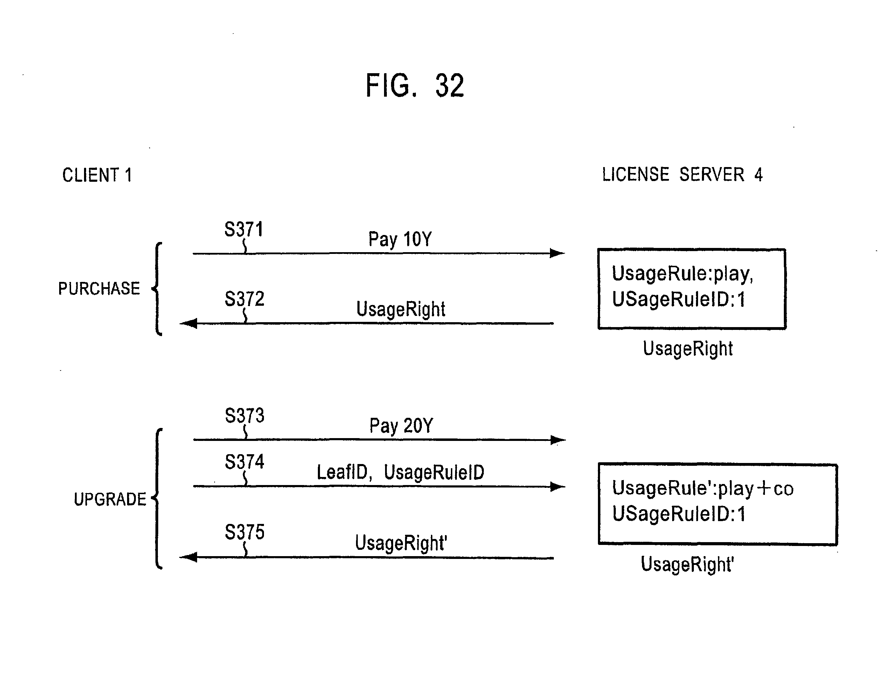

A process performed in this case will be described with reference to Figs. 31 and 32. Fig. 31 shows the rough outline of a usage rule included in product information received by the license server 4 from the content holder server 6. In this example, Usage Rule ID is set to 1. A rule that permits playback at a fee of 10 yen and a rule that permits playback and checkout at a fee of 20 yen are described.

In such a case, assume that the license server 4 divides one usage rule shown in Fig. 31 into two usage rules, that is, a playback-only usage rule and a usage rule that permits both playback and checkout, and generates usage rights associated with the two usage rules.

In this case, as shown in Fig. 32, when the client 1 pays 10 yen to the license server 4 in step S371 (although a detailed description is omitted, the specific billing processing is performed by the billing server 5; the same applies to the description below), in step S372, the license server 4 grants the playback usage right to the client 1. The process in this case is similar to a purchasing process.

Subsequently in step S373, the client 1 transmits information indicating that the client 1 consents to pay additional 20 yen. In step S374, the client 1 transmits the leaf ID of the client 1 and the ID of the usage right obtained in step S372 to the license server 4. In step S375, the license server 4 distributes the usage right including the details associated with playback and checkout to the client 1. This process is an upgrading process.

The ID of the usage right granted in step S372 is the same as the ID of the usage right granted to the client 1 by the processing in step S375. In other words, this usage right ID is associated with the ID of the usage right, such as that shown in Fig. 31, provided by the content holder server 6 to the license server 4.

In other words, although the usage right is divided into two usage rights, these two usage rights derive from the usage rule included in the same product information.

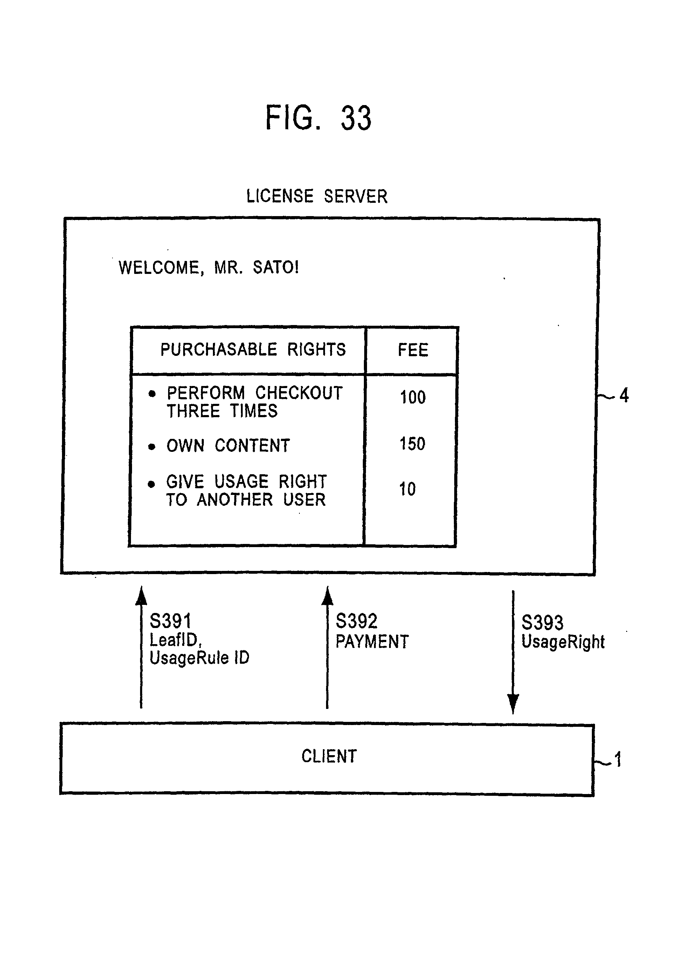

Fig. 33 shows an example of information displayed when the client 1 obtains a usage right from the license server 4. In step S391, the client 1 transmits the leaf ID to the license server 4. Also, when the client 1 has already obtained a usage right, the client 1 transmits the ID of this usage right to the license server 4.

The license server 4 transmits a document describing a list of purchasable rights and their fees to the client 1. When the CPU 21 of the client 1 receives the document via the communication unit 29, the CPU 21 outputs and displays the document on the monitor of the output unit 27.

In the example of Fig. 33, three types of usage rights are displayed serving as purchasable rights: a usage right that permits the content to be checked out three times at a fee of 100 yen; a usage right that permits the client 1 to own the already-obtained content at a fee of 150 yen; and a usage right that permits the client 1 to copy the already-obtained usage right to another client.

The usage right held by the client 1 changes depending on the fee paid by the client 1. The status of the usage right obtained by the client 1 having accessed the license server 4 is managed by the license server 4. Therefore, the CPU 21 of the license server 4 displays a menu (details of purchasable rights) associated with the client 1 having accessed the license server 4 on the basis of the leaf ID of the client 1 and the ID of the usage right held by the client 1.

In the display example of Fig. 33, the message "Welcome, Mr. Sato!" is also displayed. Since the name of the user using the client 1 having accessed the license server 4 has been registered at the time the user has performed the registration process, the user name associated with the leaf ID can be retrieved from a database and displayed.

Alternatively, a cookie may be used to display the name.

In step S392, the client 1 performs a procedure to purchase a usage right in accordance with the displayed menu and pays a fee for the usage right. In step S393, the license server 4 distributes the usage right associated with the fee to the client 1.

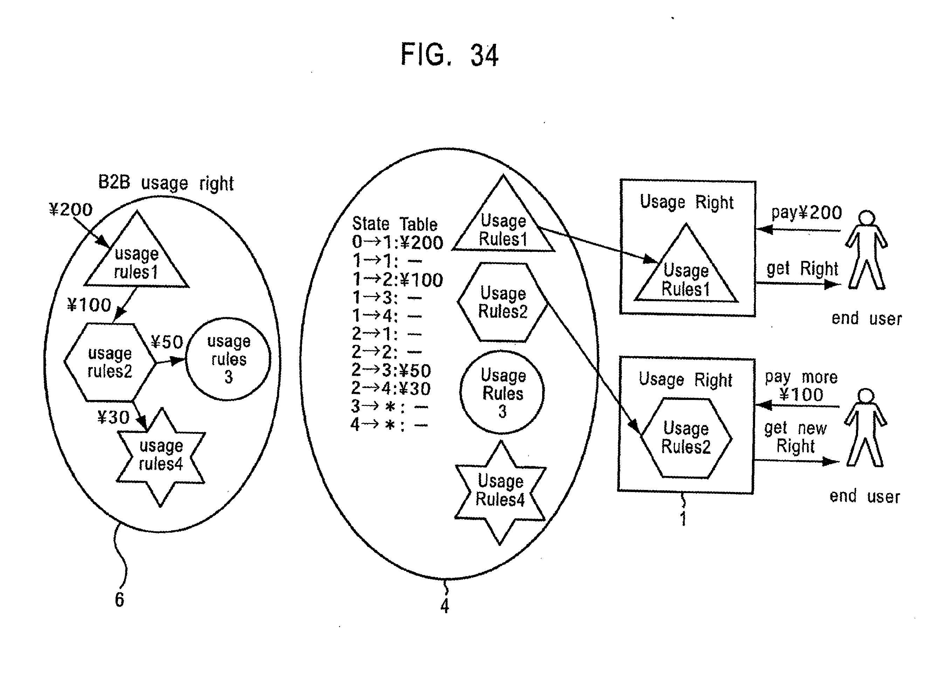

Referring to Fig. 34, purchase record management by the license server 4 will be described.

In the example of Fig. 34, the content holder server 6 supplies one piece of product information to the license server 4. This product information includes Usage Rules 1 that can be obtained at a fee of 200 yen; Usage Rules 2 that can be obtained at an additional fee of 100 yen; Usage Rules 3 that can be obtained at an additional fee of 50 yen; and Usage Rules 4 that can be obtained at an additional fee of 30 yen.

When the license server 4 obtains the product information from the content holder server 6, the license server 4 divides the product information into Usage Rules 1 to 4. The license server 4 generates and manages, in a state table, records of the usage right purchasing states associated with Usage Rules 1 to 4 according to each leaf ID and usage right.

Specifically, in this table, states 1 to 4 represent states in which Usage Rules 1 to 4 are held, respectively. State 0 represents a state in which none of Usage Rules 1 to 4 is held.

Since the status of holding the usage right is managed by the license server 4, the client 1 need not manage this status. As a result, the burden on the client 1 is lessened.

Specifically, the client 1 is only required to appropriately purchase any one of Usage Rules 1 to 4.

For example, the user of the client 1 can obtain a usage right including Usage Rules 1 by paying 200 yen. At an additional fee of 100 yen, the user of the client 1 can obtain a usage right including Usage Rules 2.

Although the same protocol can be used when the client 1 obtains any usage right, the protocol to be used may be changed depending on the details of the usage right. An example in which the protocol is changed depending on the usage right will now be described.

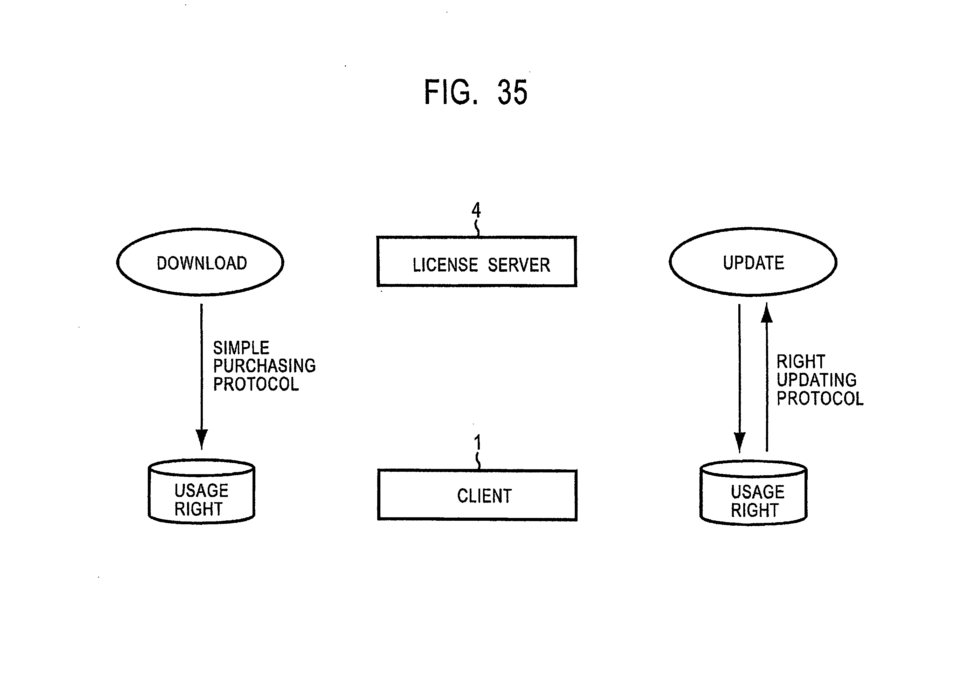

In this embodiment, as shown in Fig. 35, two types of protocols are set for distributing a usage right from the license server 4 to the client 1: a simple purchasing protocol and a right updating protocol. The simple purchasing protocol is a protocol that requires no special authentication, whereas the right updating protocol requires special authentication. In other words, the right updating protocol performs communication under a more secure environment compared with the simple purchasing protocol.

In the simple purchasing protocol, a usage right is simply downloaded from the license server 4 to the client 1. In contrast, in the right updating protocol, authentication is performed to enable the license server 4 to update a usage right held by the client 1.

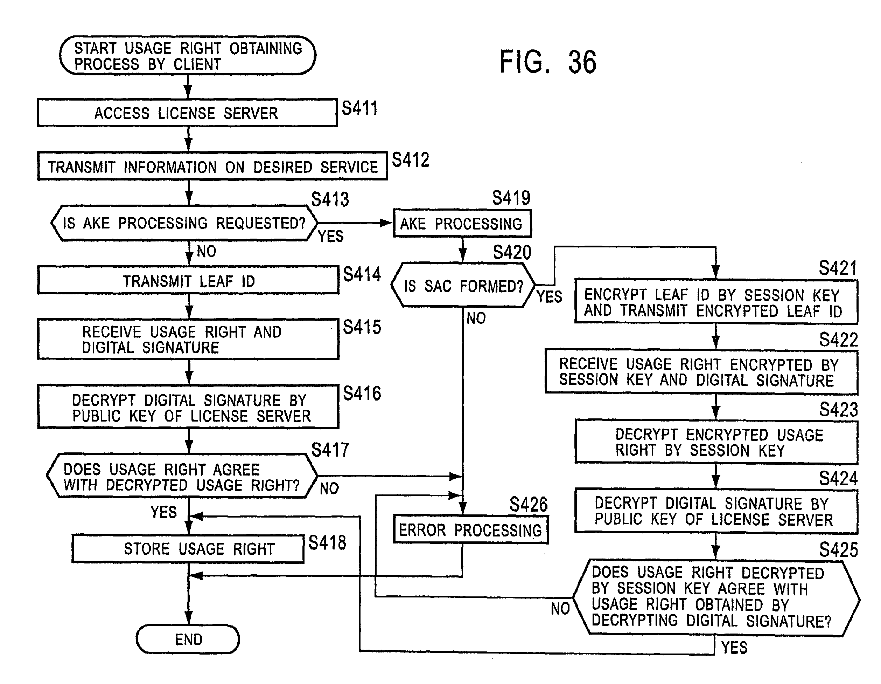

With reference to a flowchart of Fig. 36, a process of obtaining, by the client 1, a usage right from the license server 4 using different protocols, depending on the details of the usage right, will now be described.

In step S461, the CPU 21 of the client 1 accesses the license server 4. In step S412, in response to an instruction from a user, the CPU 21 transmits information concerning a usage right desired by the user via the communication unit 29 to the license server 4.

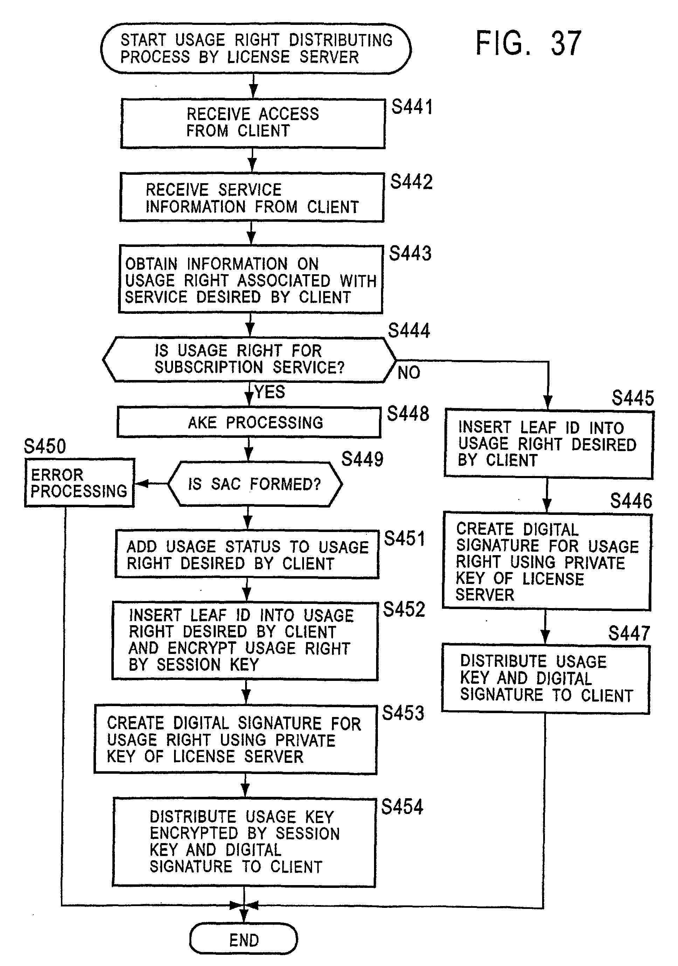

As will be described later with reference to a flowchart of Fig. 37, when the client 1 desires a usage right for a subscription service, the license server 4 requests the client 1 to perform AKE (Authentication Key Exchange) processing (step S448 of Fig. 37). In contrast, when the usage right desired by the client 1 is not for a subscription service (instead, for purchase or for listening on trial basis), the license server 4 does not request the client 1 to perform the AKE processing. In step S413, the CPU 21 determines whether the license server 4 has requested the client 1 to perform the AKE processing. When the license server 4 has not requested the client 1 to perform the AKE processing, in step S414, the CPU 21 reads a leaf ID stored in the storage unit 28 and transmits the leaf ID via the communication unit 29 to the license server 4.

At the same time, the license server 4 adds a digital signature associated with the usage right desired by the client 1 to the desired usage right and transmits the usage right with the digital signature to the client 1 (step S447 of Fig. 37). In step S415, the CPU 21 of the client 1 receives the usage right and the digital signature transmitted from the license server 4. In step S416, the CPU 21 decrypts the digital signature received in step S415 using a public key SP of the license server 4. The public key SP of the license server is obtained, along with the leaf ID, by registration and stored in the storage unit 28 (step S53 of Fig. 6).

In step S417, the CPU 21 determines whether the usage right received by the processing in step S415 agrees with the usage right obtained by decrypting the digital signature by the processing in step S416. When the two usage rights agree with each other, it is determined that the usage right is authenticate (unaltered). In step S418, the CPU 21 stores the usage right in the storage unit 28.

In contrast, when the two usage rights disagree with each other, the usage right is not authenticate. In step S416, the CPU 21 performs the error processing.

In contrast, when it is determined in step S413 that the license server 4 has requested the client 1 to perform the AKE processing, in step S419, the CPU 21 performs the AKE processing with the license server 4. Specifically, the AKE processing establishes a more secure channel, and a session key is shared.

In step S420, the CPU 21 determines whether a SAC (Secure Authentication Channel) is formed by the AKE processing (whether a secure channel is established). When it is determined that a SAC is formed, in step S421, the CPU 21 encrypts the leaf ID stored in the storage unit 28 by the session key established by the AKE processing and transmits the encrypted leaf ID from the communication unit 29 via the Internet 2 to the license server 4.

In this case, the license server 4 transmits the usage key encrypted by the session key and the digital signature to the client 1 (step S454 of Fig. 37 described below). In step S422, the CPU 21 of the client 1 receives the usage right encrypted by the session key and the digital signature. In step S423, the CPU 21 decrypts the encrypted usage right by the session key obtained by the AKE processing in step S419.

In step S424, the CPU 21 decrypts the digital signature received by the processing in step S422 using the public key SP of the license server 4. In step S425, the CPU 21 determines whether the usage right obtained by decryption by the processing in step S423 agrees with the usage right obtained by decryption by the processing in step S424. When the two usage rights agree with each other, it is determined that the usage right is authenticate. In step S418, the CPU 21 stores the obtained usage right in the storage unit 28.

When it is determined by the processing in step S425 that the two usage rights disagree with each other, the obtained usage right may not be authenticate (for example, may be altered). As in the case in which it is determined in step S420 that no SAC is formed, in step S426, the error processing is performed.

With reference to a flowchart of Fig. 37, a usage right distributing process by the license server 4, which is performed in association with the above-described usage right obtaining process by the client 1, will now be described.

In step S441, the CPU 21 of the license server 4 receives access from the client 1. In step S442, the CPU 21 receives information concerning a usage right from the client 1. This information concerning the usage right is the information transmitted from the client 1 by the processing in step S412 of Fig. 36.

In step S434, the CPU 21 of the license server 4 obtains, from the storage unit 28, information on a usage right associated with the service desired by the client 1.

In step S444, the CPU 21 determines whether the usage right desired by the client 1 is for a subscription service. When the usage right is not for a subscription service (instead, for purchase or for listening on trial basis), there is no particular need to perform communication under a secure environment. At the same time, the client 1 transmits the leaf ID (step S414 of Fig. 36). In step S445, the CPU 21 of the license server 4 receives the leaf ID transmitted by the client 1 and inserts the leaf ID into the usage right desired by the client 1.

In step S446, the CPU 21 uses a private key of the license server 4 to create a digital signature for the usage right including the leaf ID, which is inserted by the processing in step S445.

In step S447, the CPU 21 transmits the usage right including the leaf ID, which is inserted by the processing in step S445, and the digital signature created by the processing in step S446 to the client 1.

Accordingly, the transmitted usage right and digital signature are received by the client 1 in step S415 of Fig. 36.

In contrast, when it is determined in step S444 that the usage right desired by the client 1 is a usage right for a subscription service (not for purchase or for listening on trial basis), communication must be performed under a more secure environment. In step S448, the CPU 21 requests the client 1 to perform the AKE processing, and the AKE processing is performed.

In step S449, the CPU 21 determines whether a SAC is formed. When a SAC is formed, in step S451, the CPU 21 adds a usage status to the usage right desired by the client 1. In step S452, the CPU 21 inserts the leaf ID into the usage right desired by the client 1 and encrypts the usage right including the leaf ID by the session key obtained by the AKE processing in step S448.

In step S453, the CPU 21 uses its private key to create a digital signature for the usage right, which includes the leaf ID inserted by the processing in step S452 and which is encrypted by the session key by the processing in step S452.

In step S454, the CPU 21 transmits the usage right encrypted by the session key by the processing in step S452 and the digital signature created by the processing in step S453 to the client 1.

Accordingly, the transmitted usage right and the digital signature are, as described above, received by the client 1 in step S422.

When it is determined in step S449 that no SAC is formed, a secure channel is not established. In step S450, the error processing is performed.

Specifically, in this case, the usage right is not distributed to the client 1.

Since a user who does not desire a usage right to be distributed in a secure condition does not need a function for achieving the secure distribution, the usage right is distributed without placing an over heavy burden on the user. To a user who desires a usage right to be distributed under a secure environment, the usage right is distributed in a more secure manner. As a result, the stealing of a usage right by a third party is prevented.

The client 1 having obtained content and a usage right therefor in the above described manner uses (e.g., plays) the content on the basis of the usage right.

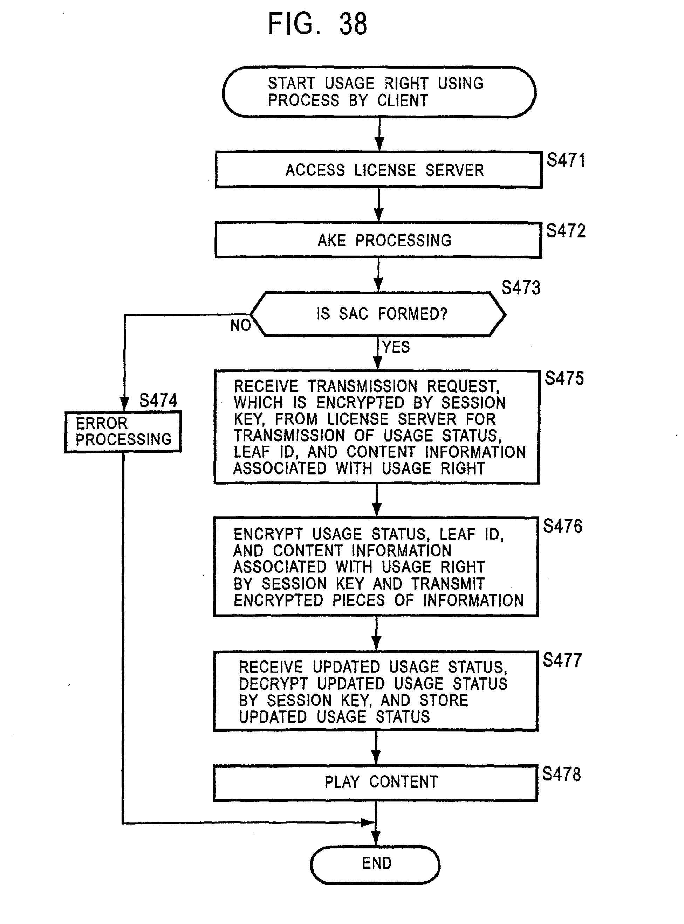

With reference to a flowchart of Fig. 38, a process performed in this case will be described.

In step S471, the CPU 21 of the client 1 accesses the license server 4. In step S472, the CPU 21 performs the AKE processing with the license server 4.

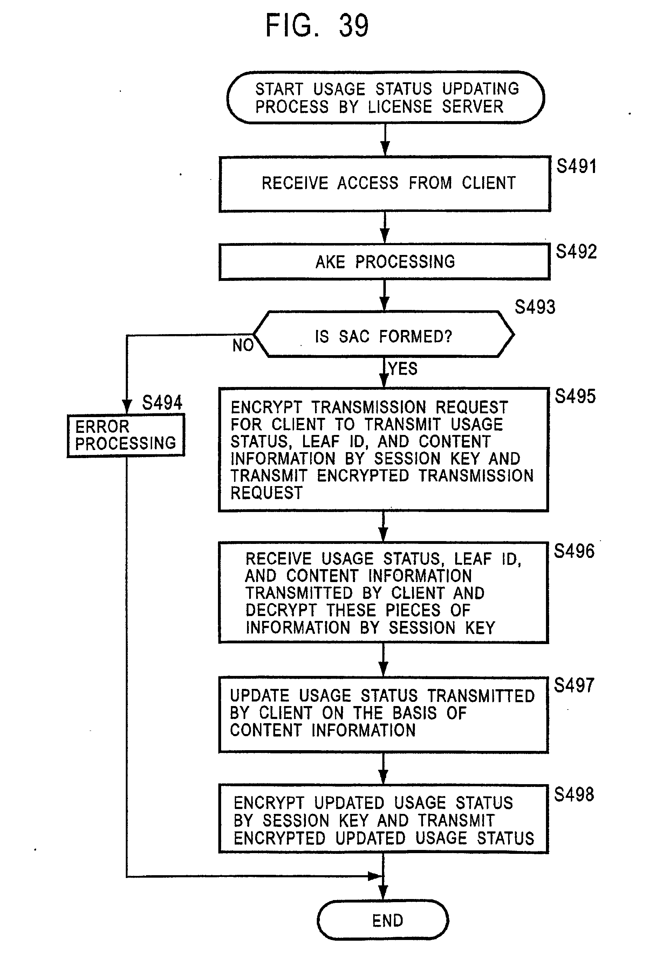

In step S473, the CPU 21 determines whether a SAC is formed. When a SAC is formed, the license server 4 requests the CPU 21 of the client 1 to transmit the usage status, leaf ID, and content information (step S495 of Fig. 39 described later).

In step S475, the CPU 21 of the client 1 receives this request from the license server 4. Since the request is encrypted by the session key obtained by the AKE processing in step S472, the CPU 21 decrypts the request using the session key obtained by the AKE processing in step S472.

In step S476, on the basis of the request, the CPU 21 uses the session key to encrypt the usage status, leaf ID, and content information associated with the usage right to be used and transmits the encrypted usage status, leaf ID, and content information to the license server 4.

In response to this transmission, the license server 4 encrypts the updated usage status by the session key and transmits the encrypted updated usage status (step S498 of Fig. 39).

In step S477, the CPU 21 of the client 1 receives the updated usage status transmitted by the license server 4, decrypts the updated usage status by the session key, and stores the decrypted updated usage status in the storage unit 28. For example, when the usage right includes a usage count, since the client 1 will play the content, the usage count is updated to a value incremented by one. In step S478, the CPU 21 plays the content.

Since the usage status is managed not by the client 1, but by the license server 4, the usage right is prevented from being altered by the client 1 for unauthorized use.

Where necessary, the license server 4 rewrites the usage status. As a result, the license server 4 can prohibit a predetermined user from using the content and can offer flexible services.

Since the license server 4 can control the usage status of the usage right held by the client 1, the license server 4 can appropriately increase/decrease the number of times the content is permitted to be used, disable each piece of content, and stop the services.

When it is determined in step S473 that no SAC is formed, in step S474, the error processing is performed.

With reference to a flowchart of Fig. 39, a process by the license server 4, which is performed in association with the above-described usage right using process by the client 1, will be described.

In step S491, the CPU 21 of the license server 4 receives access from the client 1. In step S492, the CPU 21 performs the AKE processing with the client 1. In step S493, the CPU 21 determines whether a SAC is formed as a result of the AKE processing.

When a SAC is formed, in step S495, the CPU 21 requests the client 1 to transmit the usage status, leaf ID, and content information. This request is encrypted by the session key obtained by the AKE processing in step S492 and transmitted to the client 1. As described above, the request is received by the client 1 by the processing in step S475. By the processing in step S476, the client 1 transmits information in response to the request.

In step S496, the CPU 21 of the license server 4 receives the usage status, leaf ID, and content information transmitted by the client 1. Since these pieces of information are encrypted by the session key, the CPU 21 uses the session key obtained by the AKE processing in step S492 to decrypt the information.

In step S497, the CPU 21 updates the usage status transmitted by the client 1 on the basis of the content information. For example, when the content is to be used, the usage count is changed by incrementing the usage count by one. Alternatively, when the content is to be disabled from this point onward, the CPU 21 changes the usage count to a count that prohibits the use of the content.

In step S498, the CPU 21 encrypts the usage status updated by the processing in step S497 by the session key and transmits the encrypted updated usage status to the client 1.

This usage status is, as described above, received by the client 1 in step S477.

When it is determined by the processing in step S493 that no SAC is formed, in step S494, the error processing is performed.

When usage rules are described only using flags or values, the client 1 must know the meaning of all the values. It thus becomes difficult for the license server 4 to add an additional rule item.

In contrast, when usage rules are permitted to be flexibly described, it becomes difficult for the client 1 to determine the manner in which the usage rules are expressed to the user.

To overcome these problems, each usage rule of content is described by a conditional expression consisting solely of a relational expression and a logical expression. The client 1 need not define in advance the format of each item. The client 1 can describe various usage rules. Usage rules can be described irrespective of the package on the client 1.

By limiting description of Usage Rules depending on the throughput of the client 1 or the like, the client 1 can easily analyze the meaning of each rule. An example of this technique will be described.

Usage Rules are to define the usage rules of content and, as described above, included in a Usage Right purchased by the user (client 1). Usage Rules can be defined by:

> playback count of content;
> expiration date of content;
> checkout count of content;
> etc.

These rules are described in a dedicated description language, complied to byte code, and stored in a Usage Right.

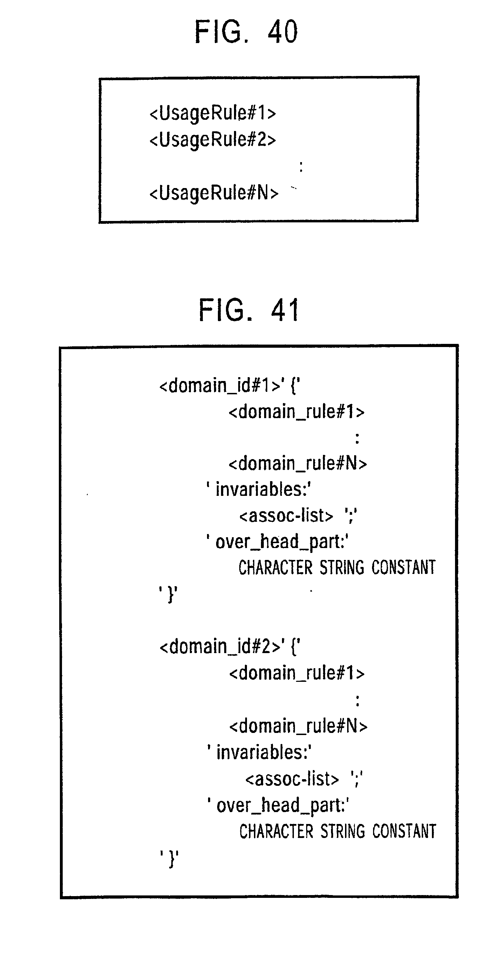

The basic description method is formatted as shown in Fig. 40. Specifically, a Usage Rule is described for each domain, that is, each category of usage of the content.

One Usage Rule is described by a format shown in Fig. 41.

In the Usage Rule, domain_id described at the beginning defines the domain to which the Usage Rule applies. In '{'...'}' subsequent to domain_id, various rules are defined. The text inside the '{'...'}' can be divided into three sections: rule section, invariables section, and overhead part.

The rule section is at the beginning of '{'...'}' and describes a plurality of domain_rules. The invariables section is subsequent to the rule section and starts with the keyword 'invariables:'. The overhead part is subsequent to the invariables section and starts with 'over_head_part:'.

The domain_id is the name of a domain and is any one of the following character strings:

> drm;
> renderer;
> ripper;

burner;
1cm_1;
1cm_2, and
1cm_3.

The renderer domain represents the category of usage including playback, display, etc. of content. The ripper domain represents the category of usage including reading content from a CD. The burner domain represents the category of usage including recording content on a CD-R. The drm domain represents the category of all usages.

The domain_rule is described in the format:
'{<conditional expression>}'.

Prior to each rule, the rule number may be specified by the following format:
'['<rule number>']'{'<conditional expression>'}'

Upon the rule number specification, a plurality of numbers may be specified:

[1]'{'<conditional expression #1>'}'
[2]'{'<conditional expression #2>'}'.

A conditional expression is generated by relational operation of Chars Code (CC) for referring to a status variable or constant of each domain. For example, a conditional expression is described as:

!ee' and !'pp'
!ee' and ('cid'>'pp')

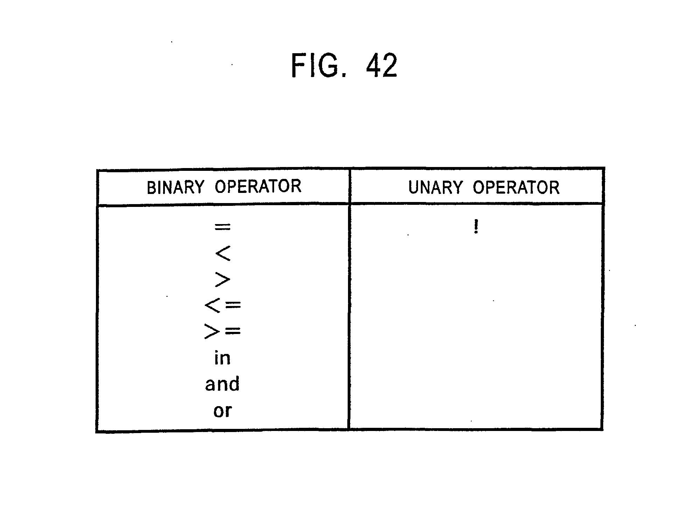

Fig. 42 shows usable operators.

The operation priority of binary operators is in the following order, starting from the weakest: or, and, and the other operators. All the operators are left associative.

The invariables section describes various constants and defines a value to each Chars Code in the following format:
<Chars Code>'='<value>';'

To define a plurality of invariables, the invariables are separated by ',' and described as follows:
<Chars Code>'='<value>','<Chars Code>'='<value>...';'

The name and meaning of <Chars Code> are defined in advance.

The overhead part describes rules independent for each domain.

Char Code may be defined, in addition to being defined in the invariables section of Usage Rules, in the usage right, content, usage status, etc.

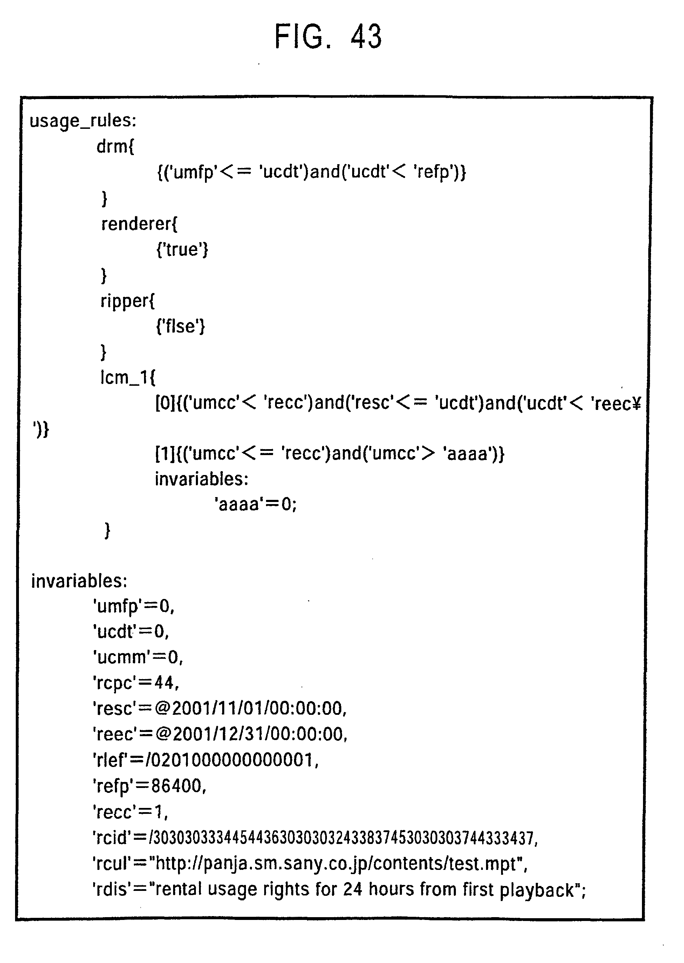

Fig. 43 shows an example described in the above rule description language.

Two or more of the above-described content server 3, the license server 4, the billing server 5, and the content holder server 6 may be substantially connected to one server where necessary.

In this embodiment, key information for decrypting encrypted content is included in the content. Alternatively, key information may be included in a usage right, or key information included in content and key information included in a usage right may be combined to decrypt the encrypted content.

Clients to which the present invention is applicable include, in addition to so-called personal computers, PDAs (Personal Digital Assistants), cellular phones, game terminals, and the like.

To perform a series of processes by software, a program constituting the software is installed via a network or a recording medium into a computer included in dedicated hardware or, for example, a general-purpose personal computer capable of performing various functions by installing various programs into the personal computer.

The recording medium includes, as shown in Fig. 2, not only a packaged medium distributed to provide a program to the user, separately from an apparatus, the packaged medium including the magnetic disk 41 (including a flexible disk), the optical disk 42 (including a CD-ROM (Compact Disk-Read Only Memory) and a DVD (Digital Versatile Disk)), the magneto-optical disk 43 (including an MD (Mini-Disk) (trademark)), or the semiconductor memory 44 having the program recorded thereon, but also the ROM 22 having the program recorded thereon or the hard disk included in the storage unit 28 provided to the user by being included in advance in the apparatus.

In the present description, steps for writing a program recorded on the recording medium include not only time-series processes performed in accordance with the described order, but also parallel or individual processes, which may not necessarily be performed in time series.

Preferably, a program for performing a security-related process is encrypted to prevent the process from being analyzed. For example, a program for performing an encryption process may be implemented as a tamper-resistant module.

In the above-described embodiment, attributes of content and content rules of a usage right are used to specify the necessary usage right for using the content. However, the necessary information for specifying the usage right is not limited to these pieces of information. For example, content may include the usage right ID of the necessary usage right for using the content. In this case, when content is specified, the necessary usage right for using the content is uniquely determined. It thus becomes unnecessary to perform a process of determining the matching between content and a usage right.

Industrial Applicability

As described above, according to the present invention, a usage right can be distributed to a user. Particularly in this case, the usage right whose details are divided into smaller sections can be distributed to the user. The usage right can be distributed without placing a burden on the user.

## Claims

**1.** An information processing apparatus that distributes a usage right defining a usage rule of content, comprising:

reception means for receiving information including the usage rule;
extraction means for extracting part of the usage rule received by the reception means and generating a partial usage rule; and
distribution means for distributing the partial usage rule generated by the extraction means to a user.

**2.** The information processing apparatus according to claim 1, further comprising generation means for generating the usage right from the partial usage rule.

**3.** The information processing apparatus according to claim 1, wherein the usage rule received by the reception means is defined for each usage of the corresponding content, and

wherein the extraction means generates the partial usage rule including a usage rule concerning said at least one usage.

**4.** The information processing apparatus according to claim 1, wherein the information received by the reception means includes billing information associated with the usage rule.

**5.** An information processing method for an information processing apparatus that distributes a usage right defining a usage rule of content, the information processing method comprising:

a reception step of receiving information including the usage rule;
an extraction step of extracting part of the usage rule received in the reception step and generating a partial usage rule; and
a distribution step of distributing the partial usage rule generated in the extraction step to a user.

**6.** A program storage medium having a computer-readable program stored thereon for an information processing apparatus that distributes a usage right defining a usage rule of content, the program comprising:

a reception step of receiving information including the usage rule;
an extraction step of extracting part of the usage rule received in the reception step and generating a partial usage rule; and
a distribution step of distributing the partial usage rule generated in the extraction step to a user.

**7.** A program for causing a computer that controls an information processing apparatus that distributes a usage right defining a usage rule of content to perform a process comprising:

a reception step of receiving information including the usage rule;
an extraction step of extracting part of the usage rule received in the reception step and generating a partial usage rule; and
a distribution step of distributing the partial usage rule generated in the extraction step to a user.
an extraction step of extracting part of the usage rule received in the reception step and generating a partial usage rule; and
a distribution step of distributing the partial usage rule generated in the extraction step to a user.

**8.** (Added) The information processing apparatus according to claim 1, further comprising storage means for storing holding status information indicating the status of holding a usage right according to each client,

wherein the distribution means determines, on the basis of the holding status information stored by the storage means, the partial usage rule to be distributed and distributes a usage right including the partial usage rule.

**9.** (Added) The information processing method according to claim 5, further comprising a storage step of storing holding status information indicating the status of holding a usage right according to each client,

wherein, in the distribution step, on the basis of the holding status information stored in the storage step, the partial usage rule to be distributed is determined and a usage right including the partial usage rule is distributed.

**10.** (Added) The program storage medium according to claim 6, the program further comprising a storage step of storing holding status information indicating the status of holding a usage right according to each client,

wherein, in the distribution step, on the basis of the holding status information stored in the storage step, the partial usage rule to be distributed is determined and a usage right including the partial usage rule is distributed.

11. (Added) The program according to claim 7, further comprising a storage step of storing holding status information indicating the status of holding a usage right according to each client,

wherein, in the distribution step, on the basis of the holding status information stored in the storage step, the partial usage rule to be distributed is determined and a usage right including the partial usage rule is distributed.

FIG. 1

EP 1 496 459 A1

# FIG. 2

EP 1 496 459 A1

# FIG. 3

```
        ┌─────────────────────────┐
        │   START DOWNLOADING      │
        │   PROCESS BY CLIENT      │
        └─────────────────────────┘
                     │
                     ▼
        ┌─────────────────────────┐
        │  ACCESS CONTENT SERVER   │
        └─────────────────────────┘
                     │
                     ▼
        ┌─────────────────────────┐
        │    REPORT CONTENT ID     │
        └─────────────────────────┘
                     │
                     ▼
        ┌─────────────────────────┐
        │     RECEIVE CONTENT      │
        └─────────────────────────┘
                     │
                     ▼
        ┌─────────────────────────┐
        │      STORE CONTENT       │
        └─────────────────────────┘
                     │
                     ▼
             (      END      )
```

# FIG. 4

```
        ┌─────────────────────────┐
        │  START PROCESS BY        │
        │  CONTENT SERVER          │
        └─────────────────────────┘
                     │
                     ▼
   ┌────────< ACCESSED BY CLIENT? >────  S21
   │  NO                          
   │                     │ YES
   │                     ▼
   │        ┌─────────────────────────┐  S22
   │        │  LOAD INFORMATION        │
   │        │  SPECIFYING CONTENT      │
   │        └─────────────────────────┘
   │                     │
   │                     ▼
   │        ┌─────────────────────────┐  S23
   │        │  READ SPECIFIED          │
   │        │  CONTENT                 │
   │        └─────────────────────────┘
   │                     │
   │                     ▼
   │        ┌─────────────────────────┐  S24
   │        │  ENCRYPT CONTENT         │
   │        └─────────────────────────┘
   │                     │
   │                     ▼
   │        ┌─────────────────────────┐  S25
   │        │  ADD KEY INFORMATION     │
   │        │  TO HEADER, WHICH IS     │
   │        │  NECESSARY FOR           │
   │        │  DECRYPTION              │
   │        └─────────────────────────┘
   │                     │
   │                     ▼
   │        ┌─────────────────────────┐  S26
   │        │  ADD HEADER TO           │
   │        │  ENCRYPTED CONTENT       │
   │        │  AND OUTPUT CONTENT      │
   │        └─────────────────────────┘
   │                     │
   │                     ▼
   │              ┌─────────────┐
   │              │     END     │
   │              └─────────────┘
```

# FIG. 5

| Header | Data |
|---|---|

| EncryptionBlock1 | EncryptionBlock2 | EncryptionBlock3 | ... |
|---|---|---|---|

| Content info. | URL | Lic. ID | EKB | $K_{EKBC}(Kc)$ | Attributes | Signatures |
|---|---|---|---|---|---|---|

| CID | Codec, etc... |
|---|---|

| IV | Seed | $E_{K'c}(data)$ |
|---|---|---|

CBC mode
$K'c = Hash(Kc, Seed)$

EP 1 496 459 A1

# FIG. 6

```
        START PLAYING
        PROCESS BY CLIENT

S41     READ ATTRIBUTES
        OF CONTENT

S42     HAS USAGE RIGHT ──NO──▶ S43  USAGE RIGHT
        BEEN OBTAINED?                OBTAINING PROCESS
              │YES

S44     IS USAGE RIGHT WITHIN ──NO──▶ S45  USAGE RIGHT
        EXPIRATION DATE?                   UPDATING PROCESS
              │YES

S46     ARE PLAYBACK ──NO──┐
        RULES SATISFIED?    │
              │YES          │
S47     READ STORED         │
        CONTENT             │
              │             │
S48     DECRYPT CONTENT     │
              │             │
S49     OUTPUT CONTENT      │
              │             │
              ▼◀────────────┘
             END
```

# FIG. 7

START USAGE RIGHT OBTAINING
PROCESS BY CLIENT

S61 · OBTAIN URL

S62 · ACCESS URL

S63 · LOAD INFORMATION
SPECIFYING USAGE RIGHT
TO BE PURCHASED

S64 · LOAD USER ID
AND PASSWORD

S65 · TRANSMIT USER ID AND
PASSWORD, ALONG WITH
USAGE RIGHT SPECIFYING
INFORMATION

S66 · IS USAGE RIGHT
OBTAINED?

NO → S68 ERROR
PROCESSING

YES

S67 · STORE USAGE RIGHT,
CERTIFICATE,
AND PRIVATE KEY

RETURN

END

# FIG. 8

| |
|---|
| VERSION |
| PROFILE |
| USAGE RIGHT ID |
| CREATION DATE |
| EXPIRATION DATE |
| USAGE RULES |
| DIGITAL SIGNATURES OF USAGE RULES |
| CONTENT RULES |
| CONSTANT |
| LEAF ID |
| DIGITAL SIGNATURE |
| CERTIFICATE |

FIG. 9

START USAGE RIGHT PROVIDING PROCESS BY LICENSE SERVER

ACCESSED BY CLIENT? — S101
NO / YES

REQUEST TRANSMISSION OF USER ID, PASSWORD, AND USAGE RIGHT SPECIFYING INFORMATION AND LOAD TRANSMITTED INFORMATION — S102

REQUEST BILLING SERVER TO PERFORM CREDIT PROCESSING — S103

IS CREDIT OK? — S104
YES / NO → ERROR PROCESSING — S112

SELECT USAGE RIGHT — S105

ADD LEAF ID — S106

SELECT USAGE RULE — S107

ADD DIGITAL SIGNATURE — S108

TRANSMIT USAGE RIGHT — S109

STORE USAGE RIGHT IN ASSOCIATION WITH USER ID AND PASSWORD — S110

BILLING PROCESSING — S111

END

FIG. 10

EP 1 496 459 A1

FIG. 11

ROOT NODE

CATEGORY
NODE →

T-system

DNK

8

24

32

## FIG. 12

FIG. 12 — Hierarchical tree diagram

- 2301 — KR (ROOT KEY)
- 2302 — NODE KEY
- MEMORY STICK (TRADEMARK)
- T-system
- 2305 — 2M PIECES CATEGORY
- 2304 — CATEGORY (2^M PIECES)
- M LEVELS
- N LEVELS
- SUBCATEGORY
- 2306 — PLAYBACK-ONLY UNIT
- 2307 — PHONE WITH MUSIC PLAYBACK FUNCTION
- 2308 — PHS
- 2309 — CELLULAR PHONE
- 2303 — LEAF KEY

EP 1 496 459 A1

# FIG. 13

| VERSION : t | |
|---|---|
| INDEX | ENCRYPTION KEY |
| 0 | Enc(K(t)0, K(t)R) |
| 00 | Enc(K(t)00, K(t)0) |
| 000 | Enc(K000, K(t)00) |
| 001 | Enc(K(t)001, K(t)00) |
| 0010 | Enc(K0010, K(t)001) |

# FIG. 14

| VERSION : t | |
|---|---|
| INDEX | ENCRYPTION KEY |
| 000 | Enc(K000, K(t)00) |
| 001 | Enc(K(t)001, K(t)00) |
| 0010 | Enc(K0010, K(t)001) |

# FIG. 15

| VERSION : t | |
|---|---|
| INDEX | ENCRYPTION KEY |
| 000 | Enc(K000, K(t)00) |
| 001 | Enc(K(t)001, K(t)00) |
| 0010 | Enc(K0010, K(t)001) |
| Enc(K(t)00, K(t)con) | |

RECORDING MEDIUM

K000

EKB PROCESSING → K(t)00

DECRYPT → K(t)con

K0000

ENCRYPT → STORE

DEVICE 0

EP 1 496 459 A1

# FIG. 16

| VERSION | DEPTH |
|---|---|
| DATA POINTER | TAG POINTER |
| SIGNATURE POINTER | RESERVED |
| DATA PORTION (E(k0, KR), ...) | |
| TAG PORTION ({0, 0}, {1, 1}, ...) | |
| SIGNATURE | |

601 — VERSION
602 — DEPTH
603 — DATA POINTER
604 — TAG POINTER
605 — SIGNATURE POINTER
606 — DATA PORTION
607 — TAG PORTION
608 — SIGNATURE

# FIG. 17

TOP NODE ADDRESS : KR

| DATA (ENCRYPTION KEY) | TAG |
|---|---|
| Enc(K(t)0, K(t)R) | {0, 1} |
| Enc(K(t)00, K(t)0) | {0, 0} |
| Enc(K000, K(t)00) | {1, 1} |
| Enc(K(t)001, K(t)00) | {0, 1} |
| Enc(K0010, K(t)001) | {1, 1} |

DATA : Eno(K(t)0, K(t)R), Eno(K(t)00, K(t)0), ......
TAG : {0, 1}, {0, 0}, {1, 1}...

EP 1 496 459 A1

# FIG. 18

LICENSE SERVER  4

CONTENT SERVER  3

| EKB | Enc(KR, Kc) | Enc(Kc, Content) |

DNK

CLIENT  1

KR

Kc

Content

# FIG. 19

EKB

Enc(DNK, KR)

# FIG. 20

CATEGORY
NODE →

T-system

MEMORY
STICK

MD

CD

Net MD

DNK1

DNK2

CONTENT 1

CONTENT 2

DEVICE D1

# FIG. 21

```
┌──────────────────────────────────────────┐
│ START PRODUCT INFORMATION PROVIDING       │
│ PROCESS BY CONTENT HOLDER SERVER          │
└──────────────────────────────────────────┘
                    │
                    ▼
┌──────────────────────────────────────┐
│ CREATE PRODUCT INFORMATION            │  S201
│ CONCERNING CONTENT                    │
└──────────────────────────────────────┘
                    │
                    ▼
┌──────────────────────────────────────┐
│ TRANSMIT PRODUCT INFORMATION          │  S202
│ TO SERVICE SERVER                     │
└──────────────────────────────────────┘
                    │
                    ▼
              ┌──────────┐
              │   END    │
              └──────────┘
```

# FIG. 22

```
┌──────────────────────────────────────────┐
│ START PRODUCT INFORMATION OBTAINING       │
│ PROCESS BY LICENSE SERVER                 │
└──────────────────────────────────────────┘
                    │
                    ▼
┌──────────────────────────────────────┐
│ RECEIVE PRODUCT INFORMATION           │  S301
│ FROM CONTENT HOLDER SERVER            │
└──────────────────────────────────────┘
                    │
                    ▼
┌──────────────────────────────────────┐
│ REGISTER PRODUCT                      │  S302
│ INFORMATION                           │
└──────────────────────────────────────┘
                    │
                    ▼
┌──────────────────────────────────────┐
║ PRODUCT INFORMATION                   ║  S303
║ DIVIDING PROCESS                      ║
└──────────────────────────────────────┘
                    │
                    ▼
              ┌──────────┐
              │   END    │
              └──────────┘
```

# FIG. 23

| RIGHT | COUNT | PERIOD | FEE |
|---|---|---|---|
| PLAYBACK | UNLIMITED | UNLIMITED | 350 |
|  | UNLIMITED | ONE MONTH | 100 |
| Check-out | THREE TIMES | UNLIMITED | 50 |
| COPY | ONCE | TEN DAYS | 50 |
| PLAYBACK AT PLACE WHERE CONTENT IS COPIED | TEN TIMES | ONE DAY | 0 |

# FIG. 24

| RULE | FEE |
|---|---|
| PLAYBACK COUNT = UNLIMITED<br>PLAYBACK PERIOD = UNLIMITED | 350 |
| PLAYBACK COUNT = UNLIMITED<br>PLAYBACK PERIOD = YYMMDD<br>CO COUNT = 3 | 150 |
| (PLACE AT WHICH CONTENT IS COPIED)<br>PLAYBACK COUNT = TEN TIMES<br>PLAYBACK PERIOD = ONE DAY | 0 |

# FIG. 25

START USAGE RULE
DIVIDING PROCESS

SEARCH RULE PORTION
IN XML FOR "playback"    S321

ANY "playback"?    S322    NO

YES

EXTRACT PERIOD FROM
PERIOD LIMITING OPTION    S323

SUBSTITUTE date_start AND date_end OF
EXTRACTED PERIOD FOR resp AND reep,
RESPECTIVELY    S324

CREATE DIVIDED USAGE RULE    S325

GENERATE AND REGISTER USAGE RIGHT    S326

RETURN

# FIG. 26

```
<rule ruld_id="usagerule-01">
 <playback timespan_id="playback_time">3</playback>
 <checkout netmd="enabled">3</checkout>
 <cdda>diabled</cdda>
</rule>

<timespan timespan_id="playback_time">
 <absolute date_start="20011201"date_end="20020228"/>
</timespan>
```

EP 1 496 459 A1

# FIG. 27

```
Usage_ruld_id:01

Usage_rules:
 renderer {
   ('resp'<='ucdt')and('ucdt'<= 'reep')
 }

Invariables:
 'resp'=@2001/12/01,
 'reep'=@2002/02/28
```

# FIG. 28

```
( START USAGE RULE DIVIDING PROCESS )
                    │
                    ▼
┌─────────────────────────────────────────┐  S341
│ SEARCH RULE PORTION IN XML FOR "playback" │
└─────────────────────────────────────────┘
                    │
                    ▼          S342
        ⟨ ANY "playback"? ⟩──── NO ──────────┐
                    │ YES                      │
                    ▼                          │
┌─────────────────────────────────────────┐  S343
│ EXTRACT PERIOD FROM PERIOD                │  │
│ LIMITING OPTION                           │  │
└─────────────────────────────────────────┘  │
                    │                          │
                    ▼                          │
┌─────────────────────────────────────────┐  S344
│ SUBSTITUTE date_start AND date_end OF     │  │
│ EXTRACTED PERIOD FOR resp AND reep,       │  │
│ RESPECTIVELY                              │  │
└─────────────────────────────────────────┘  │
                    │                          │
                    ▼                          │
┌─────────────────────────────────────────┐  S345
│ CREATE DIVIDED USAGE RULE                 │  │
└─────────────────────────────────────────┘  │
                    │◄─────────────────────────┘
                    ▼
┌─────────────────────────────────────────┐  S346
│ SEARCH RULE PORTION IN XML FOR "checkout" │
└─────────────────────────────────────────┘
                    │
                    ▼          S347
        ⟨ ANY "checkout"? ⟩──── NO ──────────┐
                    │ YES                      │
                    ▼                          │
┌─────────────────────────────────────────┐  S348
│ READ COUNT FROM RULE PORTION IN XML       │  │
└─────────────────────────────────────────┘  │
                    │                          │
                    ▼                          │
┌─────────────────────────────────────────┐  S349
│ SUBSTITUTE EXTRACTED COUNT FOR recc       │  │
└─────────────────────────────────────────┘  │
                    │                          │
                    ▼                          │
┌─────────────────────────────────────────┐  S350
│ CREATE DIVIDED USAGE RULE                 │  │
└─────────────────────────────────────────┘  │
                    │◄─────────────────────────┘
                    ▼
┌─────────────────────────────────────────┐  S351
│ GENERATE AND REGISTER USAGE RIGHT         │
└─────────────────────────────────────────┘
                    │
                    ▼
                ( END )
```

# FIG. 29

```
Usage_ruld_id:01

Usage_rules:
 renderer {
  ( 'resp' <= 'ucdt' )and( 'ucdt' <= 'reep' )
 }
 lcm_l {
  ( 'umcc' < 'recc' )
}

Invariables:
 'resp' =@2001/12/01,
 'reep' =@2002/02/28,
 'recc' =3
```

EP 1 496 459 A1

# FIG. 30

EP 1 496 459 A1

B2B

| PLAYBACK CHECKOUT PURCHASE |

CONTENT HOLDER SERVER 6

| PLAYBACK | 10Yen

| PLAYBACK CHECKOUT | 30Yen

LICENSE SERVER 4

| PLAYBACK |

UPGRADE

| PLAYBACK CHECKOUT |

CLIENT 1

# FIG. 31

UsageRuleID: 1

USageRule: pay10 → play,

pay20 → pay+co

B2B package

# FIG. 32

CLIENT 1                                                              LICENSE SERVER 4

PURCHASE {

S371 — Pay 10Y →

┌─────────────────────┐
│ UsageRule:play,     │
│ USageRuleID:1       │
└─────────────────────┘
UsageRight

S372 ← UsageRight

UPGRADE {

S373 — Pay 20Y →

S374 — LeafID, UsageRuleID →

┌─────────────────────┐
│ UsageRule':play+co  │
│ USageRuleID:1       │
└─────────────────────┘
UsageRight'

S375 ← UsageRight'

EP 1 496 459 A1

EP 1 496 459 A1

# FIG. 33

LICENSE SERVER

WELCOME, MR. SATO!

| PURCHASABLE RIGHTS | FEE |
|---|---|
| • PERFORM CHECKOUT THREE TIMES | 100 |
| • OWN CONTENT | 150 |
| • GIVE USAGE RIGHT TO ANOTHER USER | 10 |

~4

S391
LeafID,
UsageRule ID

S392
PAYMENT

S393
UsageRight

CLIENT ~1

48

# FIG. 34

B2B usage right

¥200 → usage rules1

¥100 ↓

usage rules2 → ¥50 → usage rules 3

¥30 ↓

usage rules4

6

State Table
0→1:¥200
1→1: —
1→2:¥100
1→3: —
1→4: —
2→1: —
2→2: —
2→3:¥50
2→4:¥30
3→*: —
4→*: —

Usage Rules1
Usage Rules2
Usage Rules 3
Usage Rules4

4

Usage Right
Usage Rules1
Usage Right
Usage Rules2

1

pay¥200
get Right
end user

pay more ¥100
get new Right
end user

EP 1 496 459 A1

# FIG. 35

DOWNLOAD

LICENSE SERVER 4

UPDATE

SIMPLE PURCHASING PROTOCOL

RIGHT UPDATING PROTOCOL

CLIENT 1

USAGE RIGHT

USAGE RIGHT

EP 1 496 459 A1

FIG. 36

START USAGE RIGHT OBTAINING PROCESS BY CLIENT

ACCESS LICENSE SERVER — S411

TRANSMIT INFORMATION ON DESIRED SERVICE — S412

S413
IS AKE PROCESSING REQUESTED?

S419
AKE PROCESSING

NO

TRANSMIT LEAF ID — S414

S420
IS SAC FORMED?

YES

S421
ENCRYPT LEAF ID BY SESSION KEY AND TRANSMIT ENCRYPTED LEAF ID

RECEIVE USAGE RIGHT AND DIGITAL SIGNATURE — S415

NO

S422
RECEIVE USAGE RIGHT ENCRYPTED BY SESSION KEY AND DIGITAL SIGNATURE

DECRYPT DIGITAL SIGNATURE BY PUBLIC KEY OF LICENSE SERVER — S416

S423
DECRYPT ENCRYPTED USAGE RIGHT BY SESSION KEY

S417
DOES USAGE RIGHT AGREE WITH DECRYPTED USAGE RIGHT?

NO

S424
DECRYPT DIGITAL SIGNATURE BY PUBLIC KEY OF LICENSE SERVER

YES

S426
ERROR PROCESSING

STORE USAGE RIGHT — S418

S425
DOES USAGE RIGHT DECRYPTED BY SESSION KEY AGREE WITH USAGE RIGHT OBTAINED BY DECRYPTING DIGITAL SIGNATURE?

NO

YES

END

EP 1 496 459 A1

# FIG. 37

START USAGE RIGHT DISTRIBUTING
PROCESS BY LICENSE SERVER

RECEIVE ACCESS
FROM CLIENT — S441

RECEIVE SERVICE
INFORMATION FROM CLIENT — S442

OBTAIN INFORMATION ON
USAGE RIGHT ASSOCIATED WITH
SERVICE DESIRED BY CLIENT — S443

IS USAGE RIGHT FOR
SUBSCRIPTION SERVICE? — S444

NO

YES

AKE PROCESSING — S448

S450

ERROR
PROCESSING

IS SAC FORMED? — S449

ADD USAGE STATUS TO USAGE
RIGHT DESIRED BY CLIENT — S451

INSERT LEAF ID INTO USAGE
RIGHT DESIRED BY CLIENT
AND ENCRYPT USAGE RIGHT
BY SESSION KEY — S452

CREATE DIGITAL SIGNATURE FOR
USAGE RIGHT USING PRIVATE
KEY OF LICENSE SERVER — S453

DISTRIBUTE USAGE KEY
ENCRYPTED BY SESSION
KEY AND DIGITAL
SIGNATURE TO CLIENT — S454

INSERT LEAF ID INTO
USAGE RIGHT DESIRED
BY CLIENT — S445

CREATE DIGITAL
SIGNATURE FOR USAGE
RIGHT USING PRIVATE
KEY OF LICENSE
SERVER — S446

DISTRIBUTE USAGE
KEY AND DIGITAL
SIGNATURE TO CLIENT — S447

END

# FIG. 38

```
      ┌─────────────────────────────┐
      │  START USAGE RIGHT USING     │
      │  PROCESS BY CLIENT           │
      └─────────────────────────────┘
                     │
                     ▼
      ┌─────────────────────────────┐  S471
      │    ACCESS LICENSE SERVER     │
      └─────────────────────────────┘
                     │
                     ▼
      ┌─────────────────────────────┐  S472
      │      AKE PROCESSING          │
      └─────────────────────────────┘
                     │
                     ▼                   S473
              ╱─────────────────╲
        NO   ⟨  IS SAC FORMED?   ⟩
      ◄──────╲─────────────────╱
      │              │ YES
      │              ▼
      │       ┌─────────────────────────────┐  S475
      │       │ RECEIVE TRANSMISSION REQUEST,│
      │       │ WHICH IS ENCRYPTED BY SESSION│
      │ S474  │ KEY, FROM LICENSE SERVER FOR │
      ▼       │ TRANSMISSION OF USAGE STATUS,│
┌──────────┐ │ LEAF ID, AND CONTENT INFORMATION │
│ ERROR    │ │ ASSOCIATED WITH USAGE RIGHT  │
│PROCESSING│ └─────────────────────────────┘
└──────────┘              │
      │                   ▼
      │       ┌─────────────────────────────┐  S476
      │       │ ENCRYPT USAGE STATUS, LEAF ID,│
      │       │ AND CONTENT INFORMATION      │
      │       │ ASSOCIATED WITH USAGE RIGHT  │
      │       │ BY SESSION KEY AND TRANSMIT  │
      │       │ ENCRYPTED PIECES OF INFORMATION │
      │       └─────────────────────────────┘
      │                   │
      │                   ▼
      │       ┌─────────────────────────────┐  S477
      │       │ RECEIVE UPDATED USAGE STATUS,│
      │       │ DECRYPT UPDATED USAGE STATUS │
      │       │ BY SESSION KEY, AND STORE    │
      │       │ UPDATED USAGE STATUS         │
      │       └─────────────────────────────┘
      │                   │
      │                   ▼
      │       ┌─────────────────────────────┐  S478
      │       │       PLAY CONTENT           │
      │       └─────────────────────────────┘
      │                   │
      └───────────────────┤
                          ▼
                    ┌───────────┐
                    │    END    │
                    └───────────┘
```

# FIG. 39

```
        START USAGE STATUS UPDATING
        PROCESS BY LICENSE SERVER

                    │
                    ▼
        ┌──────────────────────────┐  S491
        │  RECEIVE ACCESS FROM CLIENT │
        └──────────────────────────┘
                    │
                    ▼
        ┌──────────────────────────┐  S492
        │      AKE PROCESSING       │
        └──────────────────────────┘
                    │
                    ▼                    S493
            IS SAC FORMED?
      NO ◄────                
                    │ YES
```

S494
ERROR
PROCESSING

S495
ENCRYPT TRANSMISSION REQUEST FOR CLIENT TO TRANSMIT USAGE STATUS, LEAF ID, AND CONTENT INFORMATION BY SESSION KEY AND TRANSMIT ENCRYPTED TRANSMISSION REQUEST

S496
RECEIVE USAGE STATUS, LEAF ID, AND CONTENT INFORMATION TRANSMITTED BY CLIENT AND DECRYPT THESE PIECES OF INFORMATION BY SESSION KEY

S497
UPDATE USAGE STATUS TRANSMITTED BY CLIENT ON THE BASIS OF CONTENT INFORMATION

S498
ENCRYPT UPDATED USAGE STATUS BY SESSION KEY AND TRANSMIT ENCRYPTED UPDATED USAGE STATUS

END

# FIG. 40

<UsageRule#1>
<UsageRule#2>

        :

<UsageRule#N>

# FIG. 41

```
<domain_id#1>' {'
        <domain_rule#1>
                        :
        <domain_rule#N>
      ' invariables:'
          <assoc-list> ';'
      ' over_head_part:'
          CHARACTER STRING CONSTANT
' }'


<domain_id#2>' {'
        <domain_rule#1>
                        :
        <domain_rule#N>
      ' invariables:'
           <assoc-list> ';'
      ' over_head_part:'
          CHARACTER STRING CONSTANT
    ' }'
```

# FIG. 42

| BINARY OPERATOR | UNARY OPERATOR |
|:---:|:---:|
| =<br><br><<br><br>><br><br><=<br><br>>=<br><br>in<br><br>and<br><br>or | ! |

# FIG. 43

```
usage_rules:
        drm{
                {('umfp'<= 'ucdt')and('ucdt'< 'refp')}
        }
        renderer{
                {'true'}
        }
        ripper{
                {'flse'}
        }
        lcm_1{
                [0]{('umcc'< 'recc')and('resc'<= 'ucdt')and('ucdt'< 'reec¥
')}

                [1]{('umcc'<= 'recc')and('umcc'> 'aaaa')}
                invariables:
                        'aaaa'=0;
        }

invariables:
        'umfp'=0,
        'ucdt'=0,
        'ucmm'=0,
        'rcpc'=44,
        'resc'=@2001/11/01/00:00:00,
        'reec'=@2001/12/31/00:00:00,
        'rlef'=/0201000000000001,
        'refp'=86400,
        'recc'=1,
        'rcid'=/30303033344544363030303024338374530303037744333437,
        'rcul'="http://panja.sm.sany.co.jp/contents/test.mpt",
        'rdis'="rental usage rights for 24 hours from first playback";
```

## INTERNATIONAL SEARCH REPORT

| International application No. |
| --- |
| PCT/JP03/04544 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 8-272746 A (Xerox Corp.), 18 October, 1996 (18.10.96), Full text; Figs. 1 to 19 & EP 07152473 A1 & US 5634012 A | 1–7 |
| X | JP 2001-344437 A (Sony Corp.), 14 December, 2001 (14.12.01), Full text; Figs. 1 to 38 (Family: none) | 1–7 |
| X | JP 2000-331087 A (Sony Corp.), 30 November, 2000 (30.11.00), Full text; Figs. 1 to 7 (Family: none) | 1–7 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br> 19 May, 2003 (19.05.03) | Date of mailing of the international search report<br> 03 June, 2003 (03.06.03), |
| Name and mailing address of the ISA/<br> Japanese Patent Office | Authorized officer |
| Facsimile No. | Telephone No. |

Form PCT/ISA/210 (second sheet) (July 1998)

58